(19) Europäisches Patentamt
European Patent Office
Office européen des brevets

(11) Publication number: 0 003 149
A2

(12) # EUROPEAN PATENT APPLICATION

(21) Application number: 79200012.7

(22) Date of filing: 09.01.79

(51) Int. Cl.[2]: C 11 D 3/395
C 07 D 487/22

(30) Priority: 11.01.78 PH 20644
11.01.78 PH 20643

(43) Date of publication of application:
25.07.79 Bulletin 79/15

(84) Designated contracting states:
DE FR GB IT

(71) Applicant: THE PROCTER & GAMBLE COMPANY
301 East Sixth Street
Cincinnati Ohio 45217(US)

(72) Inventor: Sakkab, Nabil Yaqub
8880 Morley Drive
Maineville Ohio 45039 Warren County(US)

(74) Representative: Munro, Hamish David et al,
PROCTER & GAMBLE EUROPEAN TECHNICAL CENTER
Temselaan 100
B-1820 Strombeek-Bever(BE)

(54) **Composition containing a photoactivator for improved washing and bleaching of fabrics.**

(57) Combined washing and bleaching of fabrics is accomplished by use of a composition comprising a surfactant and a photoactivator. The photoactivator is a porphine or a mono-, di-, tri-, or tetraaza porphine, solubilized with anionic, nonionic and/or cationic substituent groups, and metal free or metallated with Zn(II), Ca(II), Cd(II), Mg(II), Sc(III), Al(III) or Sn(IV).

EP 0 003 149 A2

Croydon Printing Company Ltd.

0003149

# COMPOSITION CONTAINING A PHOTO-ACTIVATOR FOR IMPROVED WASHING AND BLEACHING OF FABRICS

This invention relates to household laundry compositions for combined washing and bleaching of fabrics, and to processes for simultaneous removal of stains and fugitive dyes.

United States Patent 3,927,967 relates to a washing and bleaching process utilizing photoactivating compounds, principally sulfonated zinc phthalocyanine, in the presence of visible light and atmospheric oxygen. Japanese Patent application OPI 50-113,479 teaches the use of specific mixtures of sulfonated zinc phthalocyanines as preferred bleach photoactivators. In each of the foregoing references the detergent compositions utilizing sulfonated zinc phthalocyanine contained both organic surfactant and alkaline builder salt. Belgian Patent No. 840,348 discloses the use of zinc phthalocyanine tri- and tetra-sulfonates as bleach photoactivators in unbuilt liquid detergent compositions.

U.S. Patents 2,951,797; 2,951,798; 2,951,799 and 2,951,800, assigned to Monsanto Chemical Company and issued on September 6, 1960 describe certain porphines as catalysts for the photo-oxidation of olefins.

References to carboxylated porphines have appeared in U.S. Patent 2,706,199, issued April 12, 1955, invented by Brentano et al., and C.R. Acad.Sci., Ser. C 1972, 275(11), 573-6 authored by Gaspard et al. See also Color

Index No. 74320. References to aminosulfonyl porphines are West German OLS 2,057,194 laid open June 8, 1972, invented by Von der Eltz et al.; British patent 613,781 accepted December 2, 1948, invented by Mayhew; and British patent 876,691 published September 6, 1961, issued to Geigy A.G. See also Color Index No. 74350. Other substituted porphines are disclosed in Austrian patent 267,711 issued January 10, 1969, invented by Wimmer; French patent 1,266,094 published May 29, 1961, invented by Tartter et al.; U.S. Patent 2,670,265 issued February 23, 1954, invented by Heyna et al.; British Patent 471,418 accepted August 30, 1937, invented by Groves; and JCS 1938, 1-6 authored by Dent.

It has now been found that certain species of photoactivators other than sulfonated phthalocyanines perform a similar fabric bleaching function in the presence of visible light and atmospheric oxygen. These other photoactivators provide in fact not only stain removal but also improved whitening of the fabrics in two other respects: the first of these is an improvement in the general whiteness of the fabrics, which is often referred to as whiteness maintenance; this improvement is not however accomplished in the ordinary way by reducing the reprecipitation of dirt upon cleaned fabrics, but rather by oxygen bleaching of the overall fabric discoloration that is often present in soiled fabrics even after washing with ordinary detergent compositions.

The second respect in which whiteness can be improved by the compositions of this invention is in the removal of so-called fugitive dyes --the tendency of some colored fabrics to release dye into the laundering solutions, which dye is then transferred during laundering onto other fabrics being washed therewith. Dye transfer removal using peroxy acids together with chemical activators is the subject of U.S. Patent 3,822,114 and of Belgian patent No. 843,160.

This invention relates to a detergent bleach composition comprising an anionic, nonionic, semi-polar, ampholytic, or zwitterionic surfactant and from 0.005% to 0.5% by weight of the composition of a water soluble photoactivator having the formula

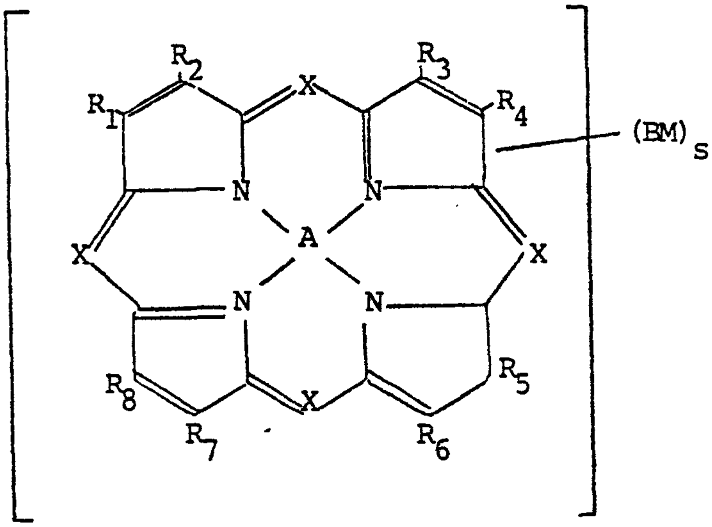

wherein each X is (=N-) or (=CY-), and the total number of (=N-) groups is 0, 1, 2, 3 or 4; wherein each Y, independently, is hydrogen or meso substituted alkyl, cycloalkyl, aralkyl, aryl,alkaryl or heteroaryl; wherein each R, independently, is hydrogen or pyrrole substituted alkyl, cycloalkyl, aralkyl, aryl, alkaryl or heteroaryl, or wherein adjacent pairs of R's are joined together with ortho-arylene groups to form pyrrole substituted alicyclic or heterocyclic rings; wherein A is 2(H) atoms bonded to diagonally opposite nitrogen atoms, or Zn(II), Ca(II), Cd(II), Mg(II), Sc(III), Al(III) or Sn(IV); wherein M is a counterion to the solubilizing groups; wherein s is the number of solubilizing groups; and wherein substituted into Y or R is B, a solubilizing group selected from the group consisting of (a) cationic groups, where M is an anion and s is from 1 to about 8; (b) polyethoxylate nonionic groups $-(CH_2CH_2O)_nH$, where M is zero, s is from 1 to about 8, and N = (sn) = the number of (condensed ethylene oxide molecules per porphine molecule) is from about 8 to about 50; (c)proximate anionic groups attached to atoms no more than 5 atoms displaced

from the porphine core, where M is cationic and s is from 3 to about 8; and (d) remote anionic groups attached to atoms more than 5 atoms displaced from the porphine core, where M is cationic and s is from 2 to about 8; wherein said alkyl groups are comprised of simple carbon chains or carbon chains interrupted by other chain-forming atoms; and provided that when the solubilizing groups are sulfonate, the number of said sulfonate groups is no greater in number than the number of aromatic and heterocyclic substituent groups, and either (i) said sulfonate groups are remote or (ii) the number of (=N-) groups in the photo-activator formula is 0, 1, 2 or 3.

Preferred cationic solubilizing groups are quaternary pyridinium and quaternary ammonium groups. Preferred anionic solubilizing groups are carboxylate, polyethoxy carboxylate, sulfate, polyethoxy sulfate, phosphate, polyethoxy phosphate, and remote sulfonate. Preferred nonionic solubilizing groups are polyethoxylates.

The solubilizing groups on a given porphine photoactivator of this invention can be, but need not be, all alike; they can be different not only as to their precise structure but also as to their electrical charge. Thus cationic, anionic, and/or nonionic solubilizing groups can be present on an individual photoactivator molecule.

The essential components of the instant invention are two in number. One is a surfactant which can be anionic, nonionic, semi-polar, ampholytic, or zwitterionic in nature, or can be mixtures thereof. Surfactants can be used at levels from about 10% to about 50% of the composition by weight, preferably at levels from about 15% to about 30% by weight.

Preferred anionic non-soap surfactants are water soluble salts of alkyl benzene sulfonate, alkyl sulfate, alkyl polyethoxy ether sulfate, paraffin sulfonate, alphaolefin sulfonate, alpha-sulfocarboxylates and their esters, alkyl glyceryl ether sulfonate, fatty acid monoglyceride sulfates and sulfonates, alkyl phenol polyethoxy ether sulfate, 2-acyloxy-

alkane-1-sulfonate, and beta-alkyloxy alkane sulfonate. Soaps are also preferred anionic surfactants.

Especially preferred are alkyl benzene sulfonates with about 9 to about 15 carbon atoms in a linear or branched alkyl chain, more especially about 11 to about 13 carbon atoms; alkyl sulfates with about 8 to about 22 carbon atoms in the alkyl chain, more especially from about 12 to about 18 carbon atoms; alkyl polyethoxy ether sulfates with about 10 to about 18 carbon atoms in the alkyl chain and an average of about 1 to about 12 $-CH_2CH_2O-$ groups per molecule, especially about 10 to about 16 carbon atoms in the alkyl chain and an average of about 1 to about 6 $-CH_2CH_2O-$ groups per molecule; linear paraffin sulfonates with about 8 to about 24 carbon atoms, more especially from about 14 to about 18 carbon atoms; and alpha-olefin sulfonates with about 10 to about 24 carbon atoms, more especially about 14 to about 16 carbon atoms; and soaps having from 8 to 24, especially 12 to 18 carbon atoms.

Water solubility can be achieved by using alkali metal, ammonium, or alkanolamine cations; sodium is preferred. Magnesium and calcium are preferred cations under circumstances described by Belgian patent 843,636. Mixtures of anionic surfactants are contemplated by this invention; a preferred mixture contains alkyl benzene sulfonate having 11 to 13 carbon atoms in the alkyl group and alkyl polyethoxy alcohol sulfate having 10 to 16 carbon atoms in the alkyl group and an average degree of ethoxylation of 1 to 6.

Preferred nonionic surfactants are water soluble compounds produced by the condensation of ethylene oxide with a hydrophobic compound such as an alcohol, alkyl phenol, polypropoxy glycol, or polypropoxy ethylene diamine.

Especially preferred polyethoxy alcohols are the condensation product of 1 to 30 mols of ethylene oxide with 1 mol of branched or straight chain, primary or secondary aliphatic alcohol having from about 8 to about 22 carbon atoms; more especially 1 to 6 mols of ethylene oxide condensed with 1

mol of straight or branched chain, primary or secondary aliphatic alcohol having from about 10 to about 16 carbon atoms; certain species of polyethoxy alcohols are commercially available from the Shell Chemical Company under the trade name "Neodol".

Preferred <u>semi-polar</u> surfactants are water soluble amine oxides containing one alkyl moiety of from about 10 to 28 carbon atoms and 2 moieties selected from the group consisting of alkyl groups and hydroxyalkyl groups containing from 1 to about 3 carbon atoms, and especially alkyl dimethyl amine oxides wherein the alkyl group contains from about 11 to 16 carbon atoms; water soluble phosphine oxide detergents containing one alkyl moiety of about 10 to about 28 carbon atoms and 2 moieties selected from the group consisting of alkyl groups and hydroxyalkyl groups containing from about 1 to 3 carbon atoms; and water soluble sulfoxide detergents containing one alkyl moiety of from about 10 to 28 carbon atoms and a moiety selected from the group consisting of alkyl and hydroxyalkyl moieties of from 1 to 3 carbon atoms.

Preferred <u>ampholytic</u> surfactants are water soluble derivatives of aliphatic secondary and tertiary amines in which the aliphatic moiety can be straight chain or branched and wherein one of the aliphatic substituents contains from about 8 to 18 carbon atoms and one contains an anionic water-solubilizing group, e.g. carboxy, sulfonate, sulfate, phosphate, or phosphonate.

Preferred <u>zwitterionic</u> surfactants are water soluble derivatives of aliphatic quaternary ammonium, phosphonium and sulfonium cationic compounds in which the aliphatic moieties can be straight chain or branched, and wherein one of the aliphatic substituents contains from about 8 to 18 carbon atoms and one contains an anionic water solubilizing group, especially alkyl-dimethyl-ammonio-propane-sulfonates and alkyl-dimethyl-ammonio-hydroxy-propane-sulfonates wherein the alkyl group in both types contains from about 1 to 18 carbon atoms.

A typical listing of the classes and species of surfactants useful in this invention appear in U.S. Patent 3,664,961 issued to Norris on May 23, 1972 and hereby incorporated herein by reference. This listing, and the foregoing recitation of specific surfactant compounds and mixtures which can be used in the instant compositions, are representative of such materials but are not intended to be limiting.

The other essential component of the instant invention is a photoactivator as described hereinbelow. This component can also be described as a photochemical activator, or as a photosensitizer: these terms are synonymous. The photoactivator is a porphine of the structure:

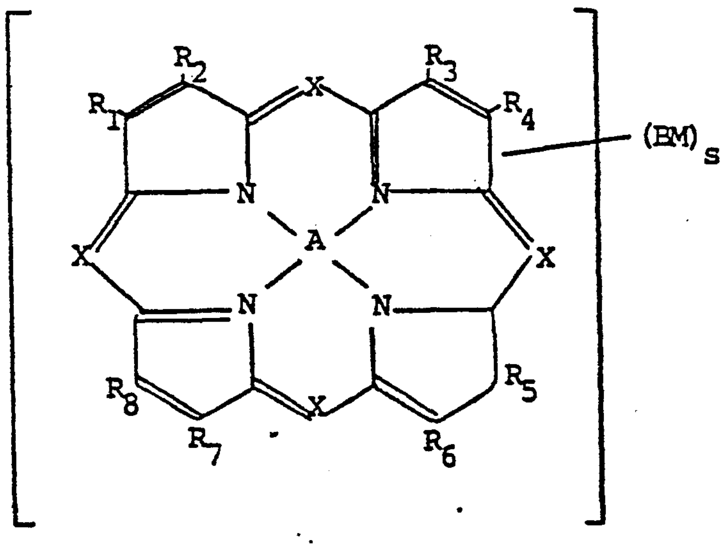

wherein each X is (=N-) or (=CY-), and the total number of (=N-) groups is 0, 1, 2, 3 or 4; wherein each Y, independently, is hydrogen or meso substituted alkyl, cycloalkyl, aralkyl, aryl,alkaryl or heteroaryl; wherein each R, independently, is hydrogen or pyrrole substituted alkyl, cycloalkyl, aralkyl, aryl, alkaryl or heteroaryl, or wherein adjacent pairs of R's are joined together with ortho-arylene groups to form pyrrole substituted alicyclic or heterocyclic rings; wherein A is 2(H) atoms bonded to diagonally opposite nitrogen atoms, or Zn(II), Ca(II), Cd(II), Mg(II), Sc(III), Al(III) or Sn(IV); wherein M is a counterion to the solubilizing groups; wherein

s is the number of solubilizing groups; and wherein substituted into Y or R is B, a solubilizing group selected from the group consisting of (a) cationic groups, where M is an anion and s is from 1 to about 8; (b) polyethoxylate nonionic groups $-(CH_2CH_2O)_nH$, where M is zero, s is from 1 to about 8, and N = (sn) = the number of (condensed ethylene oxide molecules per porphine molecule) is from about 8 to about 50; (c) proximate anionic groups attached to atoms no more than 5 atoms displaced from the porphine core, where M is cationic and s is from 3 to about 8; and (d) remote anionic groups attached to atoms more than 5 atoms displaced from the porphine core, where M is cationic and s is from 2 to about 8= wherein said alkyl groups are comprised of simple carbon chains or carbon chains interrupted by other chain-forming atoms= and provided that when the solubilizing groups are sulfonate, the number of said sulfonate groups is no greater in number than the number of aromatic and heterocyclic substituent groups, and either (i) said sulfonate groups are remote or (ii) the number of (=N-) groups in the photo-activator formula is 0, 1, 2 or 3.

In preferred photoactivators, adjacent pairs of R's are joined together with ortho-arylene groups to form alicyclic or heterocyclic rings. Benzo substitution is especially preferred; i.e. $R_1$ and $R_2$, $R_3$ and $R_6$, and/or $R_7$ and $R_8$ are connected together pairwise by methylene groups to form fused benzene rings. Other preferred forms of pyrrole substitution are naphtho, pyrido, phenyl and naphthyl.

Where there are Y groups in the above structural formula, it is preferred that Y is H, phenyl, naphthyl, thienyl, furyl, thioazyl, oxazyalyl, indolyl, benzothienyl, or pyridyl. It is especially preferred that each Y is H or that each Y is phenyl.

The photoactivating compounds of the instant invention can be unmetallated, A in the foregoing structural formula being comprised of two hydrogen atoms bonded to diagonally opposite inner nitrogen atoms of the pyrrole groups in the

molecule. Alternatively, the photoactivators of this invention can be metallated with zinc(II), calcium(II), cadmium(II), magnesium(II), scandium(III), aluminium(III), or tin(IV). Thus, altogether, A can be 2(H) atoms bonded to diagonally opposite N atoms, or Zn(II), Cd(II), Ca(II), Mg(II), Sc(III), Al(III) or Sn(IV). It is preferred that A be 2(H) or Zn(II).

Solubilizing groups can be located anywhere on the porphine molecule other than the porphine core as hereinbefore defined. Accordingly the solubilizing groups can be described as substituted into Y or R as hereinbefore defined.

Solubilizing groups can be anionic, nonionic, or cationic in nature. Preferred anionic solubilizing groups are carboxylate

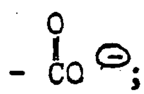; sulfate 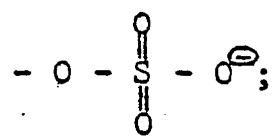; and

phosphate 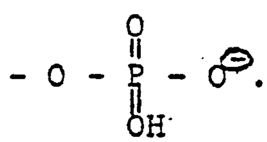. Another preferred anionic solubilising group is sulfonate 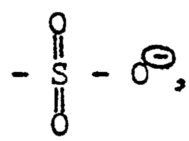, providing that the porphine molecule is restricted to 0-3 aza groups, and the sulfonate group is attached to a "remote" carbon atom as hereinafter defined.

Other preferred anionic solubilizing agents are ethoxylated derivatives of the foregoing, especially the polyethoxysulfate group $-(CH_2CH_2O)_nSO_3^{\ominus}$ and the polyethoxy carboxylate group $-(CH_2CH_2O)_nCOO^{\ominus}$ where n is an integer from 1 to about 20.

For anionic solubilizing groups, M the counterion is any cation that confers water solubility to the porphine molecule. A monovalent cation is preferred, especially ammonium, ethanolammonium, or alkali metal. Sodium is most preferred. For reasons described hereinafter the number of anionic solubilizing groups operable in the compositions of this invention is a function of the location of such groups or the porphine molecule. A solubilizing group attached to a carbon atom of the photoactivator molecule displaced more than 5 atoms away from the porphine core is sometimes herein referred to as "remote", and is to be distinguished from an attachment to a carbon atom displaced no more than 5 atoms from the porphine core, which is sometimes referred to herein as "proximate". For proximate solubilizing groups, the number of such groups per molecule, s, is from 3 to about 8, preferably from 3 to about 6, most preferably 3 or 4. For remote solubilizing groups, s is from 2 to about 8, preferably from 2 to about 6, most preferably 2 to 4.

Preferred nonionic solubilizing groups are polyethoxylates $-(CH_2CH_2O)_nH$. Defining s as the number of solubilizing groups per molecule, the number of condensed ethylene oxide molecules per porphine molecule is N = sn.

The water soluble nonionic photoactivators of this invention have a value of N between about 8 and about 50, preferably from about 12 to about 40, most preferably from about 16 to about 30. Within that limitation the separate values of s and n are not critical.

For nonionic solubilizing groups, there is no counterion and accordingly M is numerically equal to zero.

Preferred cationic solubilizing groups are quaternary compounds such as quaternary ammonium salts

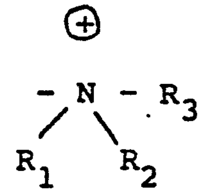

and quaternary pyridium salts 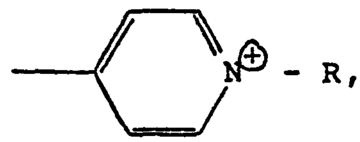

where all R's are alkyl or substituted alkyl groups.

For cationic solubilizing groups, M the counterion is any anion that confers water solubility to the porphine molecule. A monovalent anion is preferred, especially iodide, bromide, chloride or toluene sulfonate

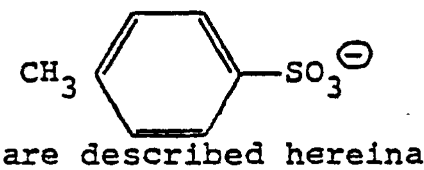

For reasons that are described hereinafter, the number of cationic solubilizing groups can be from 1 to about 8, preferably from about 2 to about 6, most preferably from 2 to 4.

Photoactivator usage in the compositions of this invention can be from about 0.001% to about 0.5% by weight of the composition. Preferable usage is from about 0.005% to about 0.1% by weight of the composition. The weight ratio of photoactivator to surfactant can be between 1/10000 and 1/20, preferably from 1/1000 to 1/100.

Although it is not wished to be bound by theory, it is believed that the mechanism of bleaching using the instant photoactivators involves (1) adsorption of dissolved photo-

activator on to fabrics, (2) excitation by visible light of the photoactivator in its ground state to the excited singlet state, (3) intersystem crossing to the triplet state which is also excited but at a lower energy level that the singlet state and (4) interaction of the triplet species with the ground state of atmospheric oxygen to form the excited singlet state of oxygen and regenerate the photoactivator in its original ground state.

The excited singlet oxygen is believed to be the oxidative species that is capable of reacting with stains to bleach them to a colorless and usually water-soluble state, thereby accomplishing the purposes of this invention.

The mechanism above-described is predicated on solubility of the photoactivator in the laundry bath. Solubilization is accomplished by introducing solubilizing groups into the molecule.

However, some care must be taken, especially with anionic solubilizing groups, to ensure that there is no undesirable aggregation of the photoactivator and this is a function of the nature and location of solubilizing groups.

The porphine photoactivators of this invention are especially useful in laundry baths in conjunction with cationic substances. Inasmuch as cotton surfaces are negatively charged, cationic substances have a strong affinity for cotton fabrics and a strong tendency to adsorb or deposit thereon. In so doing they tend to bring down or co-adsorb other substances present in the laundry bath, such as the photoactivators of this invention.

The porphine photoactivators of this invention contain in their molecular structure certain chemical groups which solubilize the photoactivator in an aqueous laundry bath. As detailed hereinafter these groups can contain a formal electrical charge, either positive or negative, or can be electrically neutral overall; in which latter case they can contain partial charges of various degrees of strength. A

photoactivator molecule can contain more than one solubilizing group, which can be all alike or can be different from one another in respect to electrical charge.

The co-adsorption phenomenon discussed alone in relation to cationic substances assumes increasing importance in relation to photoactivators having, to some extent, an anionic or negative charge, whether a negative partial charge; a negative formal charge in an electrically neutral or even cationic molecule as a whole; or a multiplicity of negative charges in an anionic photoactivator molecule. The latter is a particularly strong effect which has been discovered to apply to the most common photoactivating bleach of the prior art, viz. zinc phthalocyanine sulfonate. It will be remembered that the prior art, however, used this photoactivator in combination with anionic and not with cationic substances, and hence failed to discover the improved, indeed synergistic effectiveness demonstrated by the compositions of the instant invention.

It has been found that, for anionic photoactivators having proximate solubilizing groups, mono- and di-sulfonated photoactivator molecules are unsatisfactory, and hence photoactivators of this invention have three or more proximate solubilizing groups per molecule. Compounds having more than about eight proximate solubilizing groups per molecule are often difficult to make and have no particular advantage. Hence photoactivators of this invention having proximate solubilizing groups have from three to about eight such groups per molecule; compounds having three to six proximate solubilizing groups per molecule are preferred, and compounds having 3 or 4 proximate solubilizing groups per molecule are especially preferred as having an optimum balance of maximum bleaching effectiveness and minimum coloration.

The foregoing discussion relates to anionic photoactivators having proximate solubilizing groups. When the solubilizing groups are in remote locations, the tendency

of the photoactivator molecule to aggregate is reduced because of both electrical and steric reasons, with the result that less dimerization occurs, less buildup on the fabric occurs, and the solubilizing effect of individual solubilizing groups is enhanced. Accordingly, a minimum of 2 remotely located anionic solubilizing groups per photoactivator molecule is satisfactory for the practice of this invention, with 2 to about 6 being preferred and 3 or 4 being especially preferred.

Nonionic solubilizing groups have a low tendency to aggregate because there is no electrical charge-density effect and there is a particularly large steric effect reducing orderly association between photoactivator molecules. Because solubilization of polyethoxylated photoactivator molecules occurs primarily because of numerous ether groups in the polyethoxylate chains, it is of little consequence whether there is a single very long chain or a number of shorter chains. Accordingly, the solubility requirement as hereinbefore expressed is in terms of the number of condensed ethylene oxide molecules per porphine molecule, which is from about 8 to about 50, preferably from about 12 to about 40, most preferably from about 16 to about 30.

Photoactivators having cationic solubilizing groups do not effectively aggregate at all because the electron density in the ring is reduced. Direct substantivity on cotton fabrics is great. Only one solubilizing group is enough to accomplish the purposes of this invention, although more are acceptable and indeed preferred. Accordingly the limiting numbers of solubilizing cationic groups are from 1 to about 8, preferably from about 2 to about 6, most preferably from 2 to 4.

As stated hereinabove, the macromolecular structure comprising the porphine core contributes the essential photoactivation properties of the compounds of this invention. It follows inexorably that large numbers of compounds having

this macromolecular core, but with myriads of different substituent groups, are effective in the practice of this invention. One versed in the art will recognize the impracticability of reducing to writing all possibilities that can be envisioned by a skillful practioner. The embodiments which follow are therefore to be considered exemplary but not exhaustive.

Photoactivators that are effective bleaching agents for fabrics and are within the scope of this invention are the following:

Tetrabenzo - α, β, γ, δ - tetrakis (4-N-ethyl) pyridyl porphine tetrachloride; tetrabenzo - α, β, γ, δ - tetrakis (N-trimethyl) aminoethyl porphine tetraiodide; tetrabenzo - α, β, γ, δ - tetrakis (4-carboxyphenyl) porphine cadmium, tetrasodium salt; tetrabenzo - α, β, γ, δ - tetrakis (4-sulfatophenyl) porphine zinc, tetrapotassium salt; tetrabenzo - α, β, γ, δ - tetrakis (4-sulfato polyethoxy phenyl) porphine, tetrasodium salt; tetra benzo - α, β, γ, δ - tetrakis (4-carboxy polyethoxy phenyl) porphine magnesium, tetraamonium salt; tetrabenzo - α, β, γ, δ - tetrakis (4-phosphatophenyl) porphine, tetrapotassium salt; tetrabenzo - α, β, γ, δ - tetrakis (4-phosphato polyethoxy phenyl) porphine zinc, tetra(monoethanolamine) salt; trans-dichloro, tetrabenzo - α, β, γ, δ - tetrakis (4-polyethoxy phenyl) porphine tin (IV).

Tetrakis (N-methyl) pyrido porphine zinc tetraiodide; tetrakis (N-trimethyl)- aminobenzo porphine, tetra (toluene sulfonate) salt; trans-dibromo, tetrakis (carboxybenzo) porphine tin(IV), tetra(diethanolamine) salt; tetrakis

(sulfato benzo) porphine zinc, tetrasodium salt; chloro, tetrakis (sulfato polyethoxy benzo) porphine scandium, tetrammonium salt; tetrakis (carboxy polyethoxy benzo) porphine, tetrasodium salt; tetrakis (phosphato benzo) porphine zinc, tetralithium salt; tetrakis (phosphato polyethoxy benzo) porphine, tetra(triethanolamine) salt; tetrakis (polyethoxy benzo) porphine; tetrabenzo - α, β, γ, δ - tetrakis-(-4 carboxyphenyl) porphine zinc, tetrasodium salt.

Tetranaphtho - α, β, γ, δ - tetrakis - (4-phosphato polyethoxy phenyl) porphine, tetrasodium salt; tetrakis (N-methyl) pyrido - α, β, γ, δ - tetranaphthyl porphine tetrachloride; chloro, tetrakis (polyethoxy naptho) - α, β, γ, δ - tetra phenyl porphine scandium; tetrakis (N-diethyl-N-propyl) - aminobenzo - α, β, γ, δ - tetrakis (4-N-methyl) pyridyl porphine magnesium, octabromide; tetrakis (carboxynaphtho) - α, β, γ, δ - tetrakis (4-carboxy phenyl) porphine zinc, octa potassium salt; tetrakis (polyethoxy benzo) - α, β, γ, δ - tetrakis (polyethoxy phenyl) porphine; trans-dichloro, 1, 3, 5, 7 - tetrakis (carboxy phenyl) - α, β, γ, δ - tetrakis (polyethoxy phenyl) porphine tin(IV), tetra ammonium salt; 1, 3, 5, 7 - tetrakis (sulfato polyethoxy phenyl) - α, β, γ, δ - tetrakis (carboxy naphthyl) porphine cadmium, octa di(ethanolamine) salt; 1, 3, 5, 7 - tetrakis (phosphato phenyl) - α, β, γ, δ - tetrakis (4-N-methyl) pyridyl porphine zinc, tetra sodium salt tetra chloride; 1, 3, 5, 7 - tetrakis (N-trimethyl)aminobutyl

α, β, γ, δ - tetrakis polyethoxy phenyl porphine, tetraiodide.

1, 3, 5, 7 - tetrakis (4-carboxy phenyl) - α, β, γ, δ - tetrakis - (4-carboxy phenyl) porphine, octasodium salt; 1, 3, 4, 6 - tetrakis (carboxyethyl) - α, β, γ, δ - tetrakis - (4-carboxy naphthyl) porphine, octasodium salt; 1, 2, 3, 4 - tetrakis (phosphato phenyl) - α, β, γ, δ - tetra phenyl porphine zinc, tetra (monoethanolamine) salt; 2, 3, 6, 7 - tetrakis (sulfatoethyl) -α, β, γ, δ - tetra anthracyl porphine, tetrammonium salt; dibenzo - α, β, γ, δ - tetrakis - (4-N-ethyl) pyridyl porphine cadmium tetra-iodide; dinaphtho - α, β, γ, δ - tetrakis - (4-carboxy phenyl) porphine, tetrapotassium salt; di(N-triethyl)-aminobenzo - α, β, γ, δ - tetrakis - (N-triethyl aminomethyl porphine zinc hexabromide; tetrakis - (carboxy benzo) - α, β, γ - tri (4-carboxy phenyl) porphine, heptasodium salt; tetrakis (phosphato benzo) - α - mono(phosphato phenyl) porphine, pentapotassium salt; 1, 5 - di(polyethoxy phenyl) - α, β, γ, δ - tetrakis (polyethoxy phenyl) porphine; 1 - mono (polycarboxy phenyl) - α, β, γ, δ - tetrakis (polycarboxy phenyl) porphine, pentasodium salt;

1, 2, 3, 4, 5, 6, 7, 8 - octa - (4-N-ethyl pyridyl) - α, γ - di(2-thioazyl) - porphine octaiodide; 1, 2, 3, 4, 5, 6, 7, 8 - octa - (4-sulfato phenyl) - α - (2-oxazolyl) - porphine, octasodium salt; 1, 2, 3, 4, 5, 6, 7, 8 - octa - (4-polyethoxy phenyl) - α, β - di(2-indolyl) - porphine; 1, 2, 5, 6 - tetrakis - (4-carboxy polyethoxy phenyl) - α, β, γ, δ - tetrakis (methoxy phenyl) - porphine,

tetrasodium salt; 1,3,5,7 - tetrakis - (4-carboxy phenyl)- α, β, γ, δ - tetrakis (2-benzo thienyl)- porphine, tetrasodium salt; tetrakis (N-methyl pyrido) - α, β, γ, δ - tetraaza porphine tetraiodide; mono (N-trimethyl amino ethyl benzo)- α, β, γ, δ - tetraaza porphine monoiodide; tribenzo-α (polyethoxy phenyl) - β, γ, δ - triaza porphine; tri(sulfobenzo)monobenzo- α, β, γ, δ -tetraaza porphine zinc, trisodium salt; tetra (sulfobenzo) - α, β, γ, δ - tetraaza porphine, tetrapotassium salt; tri(sulfobenzo)- tetraaza porphine, triammonium salt; tetra(sulfonaphtho)tetraaza porphine, cadmium, tetra(monoethanolamine)salt; tetrasulfo dibenzo dinaphtho tetraaza porphine magnesium, tetra iodide.

α, β, γ, δ - tetrakis (sulfophenyl) porphine, tetra sodium salt; α, β, γ - tri (sulfophenyl) - δ (phenyl) porphine zinc, tri ammonium salt; α, β, γ, δ - tetrakis (2-thienyl, 5-sulfo) porphine zinc, tetra sodium salt; α, β, γ - tri (2-thienyl, 5-sulfo) - δ (2-thienyl) porphine magnesium, tri potassium salt; α, β, γ, δ - tetrakis (2-furyl, 5-sulfo) porphine, tetra ammonium salt; α, β, γ - tri (2-furyl, 5-sulfo) - δ (2-furyl) porphine, tri ammonium salt;

α, β, γ, δ - tetrakis (2-oxazolyl, 3-sulfo) porphine magnesium, tetra sodium salt; α, β, γ - tri (2-oxazolyl, 3-sulfo) - δ (2-oxazolyl) porphine cadmium, tri (tri ethanol amine) salt; α, β, γ, δ - tetrakis (4-pyridyl, mono sulfo) porphine zinc, tetra ammonium salt; α, β, γ - tri (4-pyridyl, mono sulfo) - δ (4-pyridyl) porphine, tri (di ethanol amine) salt; chloro, α, β, γ, δ-tetrakis (2-pyridyl, mono sulfo) porphine scandium, tetra potassium salt;

1, 2, 3, 4, 5, 6, 7, 8 - octaisopropyl-α, β, γ, δ - tetrakis (2-oxazolyl, 4-sulfo) porphine cadmium, tetra ammonium salt; 1, 2, 3, 4, 5, 6, 7, 8 - octa n-butyl - α, β, γ - tri (2-pyridyl, mono sulfo) - δ (2-pyridyl) porphine, tri sodium salt; 1, 2, 3, 4, 5, 6, 7, 8 - octa sulfo phenyl porphine, octa sodium salt; 1, 2, 3, 4, 5, 6, 7, 8 - octa sulfo phenyl porphine, octa sodium salt; 1, 2, 3, 4, 5, 6, 7, 8 - octa sulfo phenyl porphine zinc, octa ammonium salt;

Trans-dibromo, tetra sulfo benzo porphine tin (IV), tetra lithium salt; benzo tri sulfo benzo porphine scandium, tri ammonium salt; bromo, benzo tri sulfo benzo ethanol amine) salt; benzo tri sulfo benzo porphine magnesium, tri potassium salt; benzo tri sulfo benzo-meso-tetra phenyl porphine cadmium, tri sodium salt; tri sulfo pyrido porphine, tri ammonium salt; tri sulfo pyrido magnesium, tri ammonium salt; tri sulfo pyrido porphine, tri sodium salt; meso-disulfopyrryl-meso-disulfo phenyl porphine, tetra sodium salt; meso-disulfo-pyrryl-meso-disulfo phenyl porphine zinc, tetra sodium salt; dibenzo-meso-tetra-(2-thienyl-5-sulfo) porphine, tetra ammonium salt; dibenzo-meso-tetra-(2-furyl-5-sulfo) porphine zinc, tetra sodium salt; benzo-sulfobenzo-meso-tetra-(2-thiazolyl-3-sulfo) porphine, penta sodium salt; benzotrisulfobenzo-meso-tetra-(2-thiazolyl-3-sulfo) porphine zinc, hepta sodium salt; disulfobenzo-meso-di(2-oxazolyl-3-sulfo)-di(2-oxazolyl) porphine, tetra sodium salt; trisulfo naphtho porphine zinc, tri ammonium salt; disulfo benzo disulfo naphthyl porphine zinc, tetra ammonium salt; disulfo benzo sulfo naphthyl porphine, tri ammonium salt; mono sulfo benzo

disulfo naphthyl porphine, tri ammonium salt; tetra sulfo benzo-meso-tetramethyl porphine, tetra ammonium salt; tetra-sulfo naphtho-meso tert-butyl porphine zinc, tetra ammonium salt; tri-sulfo naphtho-meso-n-propyl porphine, tri ammonium salt; tetra sulfo benzo triaza porphine, tetra sodium salt; tetrasulfo benzo triaza porphine zinc, tetra sodium salt; tetrasulfo benzo triaza porphine, tetra ammonium salt; tetrasulfo benzo-α,β,γ-triaza-δ-sulfophenyl porphine zinc, penta ammonium salt; tetrasulfo benzo diaza porphine, tetra ammonium salt; tetrasulfo benzo diaza porphine zinc, tetra sodium salt; tetrasulfo benzo diaza porphine, ammonium salt; tetrasulfo benzo diaza porphine zinc, tetra sodium salt.

Tetrasulfo benzo-α-aza-β, γ, δ-triethyl porphine zinc, tetra ammonium salt; tetrasulfo benzo mono aza porphine, tetra sodium salt; tetrasulfo benzo mono aza porphine zinc, tetra ammonium salt; tetrasulfo benzo mono aza porphine, tetra sodium salt; trisulfo benzo triaza porphine, tri sodium salt; trisulfo benzo triaza porphine zinc, tri sodium salt; trisulfo benzo diaza porphine zinc, tri sodium salt; trisulfo benzo-α, β-diaza-γ, δ-disulfo naphthyl porphine, hexa sodium salt; trisulfo benzo monoaza porphine, tri sodium salt; trisulfo benzo monoaza porphine zinc, tri ammonium salt.

Tetrasulfo dibenzo dinaphtho diaza porphine, tetra ammonium salt; tetrasulfo benzo trinaphtho monoaza porphine, tetra ammonium salt; trisulfo tribenzo naphtho triaza porphine, tri ammonium salt; trisulfo dibenzo dinaphtho diaza porphine zinc, tri sodium salt; trisulfo dibenzo dinaphtho monoaza porphine zinc, tri sodium salt; 1,3,5,7-tetra phenyl-α,β,γ,δ-tetrakis(2-oxazolyl,4-sulfo) porphine magnesium, tetra sodium salt; sulfobenzo-α,β,γ-tri(2-thienyl-5-sulfo)

porphine cadmium, tetra potassium salt; trisulfobenzo-α, β, γ-(2-furyl-5-sulfo) porphine, tetra ammonium salt; 1,2,3,4,5,6,7,8-penta sulfo phenyl porphine zinc, penta sodium salt; 1,2,3,4,5,6,7,8-hexasulfo phenyl porphine, hexa sodium salt; chloro, heptasulfo naphthyl porphine scandium, hepta sodium salt.

Each of the foregoing illustrative photoactivators is a specific chemical compound. It should be understood that alternative photoactivators, each within the scope of the instant invention, are those wherein substituted in each specific named compound are, inter alia:

a) instead of a specific cation listed: sodium, potassium, lithium, ammonium, monoethanolamine, diethanolamine, or triethanolamine salts.

b) instead of a specific anion listed: chloride, bromide, iodide, or toluene sulfonate salts.

c) instead of the metallation listed: zinc(II), calcium(II), cadmium(II), magnesium(II), scandium(III), aluminium(III), tin(IV), or metal free.

d) instead of the specific alkyl groups mentioned: methyl, ethyl, n-propyl, isopropyl, n-butyl, isobutyl, sec-butyl, or tertbutyl.

e) instead of the specific solubilizing group mentioned: carboxylate, polyethoxy carboxylate, sulfate, polyethoxy sulfate, phosphate, polyethoxy phosphate, sulfonate, quaternary pyridinium, quaternary ammonium, or polyethoxylate.

f) instead of the number of solubilizing groups mentioned: any number of solubilizing groups that is not greater than the number of pyrrole-substituted aromatic or pyrido groups plus the number of meso-substituted aromatic or heterocyclic groups and that is, for cationic or nonionic solubilizing groups, from 1 to 8; for remote anionic solubilizing groups, from 2 to 8; and for non-remote solubilizing groups, from 3 to 8.

g) instead of the specific pyrrole substituents mentioned: benzo, naphtho, pyrido, phenyl or naphthyl.

h) instead of the specific meso substituents mentioned: phenyl, naphthyl, thienyl, furyl, thioazyl, oxazyalyl, indolyl, benzothienyl, or pyridyl.

The alternative photoactivator compounds described above are to be considered equally illustrative of the compounds of this invention as the compounds specifically named in the preceding list.

Among photoactivators solubilized by sulfonate groups, preferred photoactivators are those wherein each R is H, Y is meso-substituted phenyl, and each B is substituted into Y. Other preferred sulfonate-solubilised photoactivators are those wherein $R_1$ and $R_2$, $R_3$ and $R_4$, $R_5$ and $R_6$, and $R_7$ and $R_8$ are each joined together pairwise by methylene groups to form fused benzene rings (i.e. pyrrole substituted benzo); wherein each Y is H; and wherein each B is substituted into R. Especially preferred sulfonated photoactivators are: meso-phenyl trisulfophenyl porphine, sodium salt; meso-phenyl trisulfophenyl porphine zinc, sodium salt; meso-phenyl

tetrasulfophenyl porphine, sodium salt; meso-phenyl tetrasulfophenyl porphine zinc, sodium salt; benzo trisulfobenzo porphine, sodium salt; benzo trisulfobenzo porphine zinc, sodium salt; benzo tetrasulfo porphine, sodium salt; benzo tetrasulfo porphine zinc, sodium salt; benzo trisulfobenzo monoaza porphine, sodium salt; benzo trisulfobenzo monoaza porphine zinc, sodium salt.

Tetrasulfobenzo monoaza porphine, sodium salt; tetrasulfobenzo monoaza porphine zinc, sodium salt; benzo trisulfobenzo diaza porphine, sodium salt; benzo trisulfobenzo diaza porphine zinc, sodium salt; tetrasulfobenzo diaza porphine, sodium salt; tetrasulfobenzo diaza porphine zinc, sodium salt; benzo trisulfobenzo triaza porphine zinc, sodium salt; benzo trisulfobenzo triaza porphine zinc, sodium salt; tetrasulfo triaza porphine, sodium salt; tetrasulfo triaza porphine zinc, sodium salt.

The literature contains references to numerous means of preparation of porphine and its derivatives, i.e. to the photoactivators of this invention. One skilled in the art of porphine or phthalocyanine chemistry will have no difficulty selecting a synthesis appropriate for his particular purposes. Some of the synthesis reactions are accompanied by side reactions; in these cases conventional means of separation and purification are needed, such as chromatographic techniques, in a manner also detailed in the literature and well known to the skilled practitioner.

It may be said that there are two general preparative routes to make solubilized substituted porphines. The first

route is to prepare the substituted porphine of choice and then solubilize it by introduction of appropriate solubilizing groups. This route is especially applicable to the preparation of sulfonated porphines, and is illustrated hereinafter by the synthesis of diverse individual sulfonated porphine species. The second route is to prepare the solubilized porphine species of choice by using starting materials already containing the desired solubilizing groups as part of their own constitution. This route is especially applicable to the preparation of porphines solubilized by groups other than sulfonate, and is illustrated hereinafter by the synthesis of diverse compounds of this type. It will be appreciated by one skilled in the art that these two preparative routes are by no means exclusive for these two types of compounds, respectively. Indeed it is possible, within the scope of this invention, to prepare porphine compounds having some solubilizing groups introduced by the first route and some by the second route, with the two sets of solubilized groups (those introduced by the first route and the second route, respectively) being either the same or different. Illustrative examples of these variations are also described hereinafter.

The first preparative route, as defined above, involves preparing porphines by reacting substituted or unsubstituted heterocyclic or aromatic carboxaldehydes with substituted or unsubstituted pyrroles. By varying the substituent groups of one or the other or both of these reactants, a great variety of porphine derivatives can be obtained.

This type of reaction can be carried out by refluxing the reactants in propionic acid for about 30 to 60 minutes followed by chromatographic purification. This method is described by Adler in J. Organic Chemistry, volume 32, page 476 (1967) which is herein incorporated by reference.

Any of the resultant metal-free compounds can be converted to the corresponding metallated compound by heating with a metal salt of Zn(II), Ca(II), Mg(II), Sc(III)

or Sn(II) in an appropriate solvent. [The Sn(II) becomes oxidized in the process, such that the photoactivator is metallated by Sn(IV)]. For example, heating α,β,γ,δ-tetrakis(4-pyridyl) porphine in dimethylformamide in the presence of zinc acetate yields α,β,α,δ-tetrakis(4-pyridyl) porphine zinc. This method is described by Adler in J. Inorganic Nuclear Chemistry, volume 32, pages 2443-5 (Pergamon Press Inc., Great Britain, 1970) which is herein incorporated by reference.

Alternatively, a metallated derivative can be prepared by carrying out the synthesis reactions indicated above in the presence of a salt of the desired metal. For example, if cadmium chloride is present while carrying out the reaction, the resultant photoactivator compound becomes metallated with cadmium. This reaction for producing a metallated compound may be preferred because the presence of the metal tends to increase stability of the desired quadridentate structure and tends to minimize the formation of other reaction products.

A completely different route to porphine compounds having fused ring substitution on the pyrrole rings is the condensation and rearrangement of 4 molecules of cyano aromatic or cyano heterocyclic ketones to form a quadridentate structure. This is done by heating in the presence of metallic zinc, cadmium, magnesium, scandium, aluminium or tin, or a metal salt of Zn(II), Ca(II), Cd(II), Mg(II), Sc(III), Al(III), or Sn(II), and yields the corresponding metallated porphine. For example, the heating of σ-cyano-acetonaphthone in the presence of powdered magnesium gives magnesium tetranaphthoporphine.

Similarly, condensation and rearrangement of imides and aromatic vicinal dinitriles yields aza porphine structures as does condensation and rearrangement of aromatic vicinal dicarboxylic acids in the presence of ammonia. Molybdic or tungstic acid or metallic antimony can be employed, as desired, to accelerate the reactions. For example, maleimide

will react to tetrazaporphine and phthalonitrile will react to tetrabenzotetraaza porphine.

A mixture of metal cyanide together with a ketone whose two side groups are (alkyl or aryl) and (halo aryl or halo heterocyclic), respectively, yields a mixture of mono- and di-aza porphines.

Similarly, a mixture of phthalonitrile and a ketone whose side groups are (alkyl or aryl) and (cyanoaryl or cyanoheterocyclic), respectively, yields a mixture of mono- and di-aza porphines. Substitution of the meso-carbon atoms can be varied by appropriate choice of ketone.

An especially versatile method of preparing mono-, di- and tri-aza porphines uses mixtures of pyrroles and carboxaldehydes together with dinitriles or imides. Through suitable proportionation of the starting materials, mixtures of reaction products are obtained that are primarily mono-, di-, or tri-aza porphines, as desired. If pure species are desired, these reaction products can be purified by ordinary chromatographic techniques.

A mixture of phthalonitrile, a metal salt, and methylene phthalimidene or phthalimideneacetic acid yields triazaporphine, as shown below. Varying the substituent groups forms substituted triaza porphines according to usual chemical principles.

When the foregoing condensation method is used, unmetallated derivatives can be prepared by treatment with concentrated sulfuric acid followed by dilute alkali with cooling, as described by Helberger in Annalen 529, 305(1937) which is herein incorporated by reference.

Sulfonation of the substituted porphines described hereinbefore can be accomplished by ordinary methods such as are familar to the skilled chemist. Sulfuric acid, oleum, chlorosulfonic acid and the like are effective sulfonating agents. As usual, higher degrees of sulfonation are obtained by increasing reaction time or temperature or by selection of a stronger sulfonating agent.

Sulfonation occurs principally on benzo, naphtho, or other aromatic groups fused directly onto the pyrrole rings or on aromatic groups such as phenyl or naphthyl substituted on the pyrrole rings; and also on phenyl, naphthyl, or other aromatic groups in the meso position. Sulfonation can also occur on pyrido, pyrryl and furan heterocyclic groups, and on aromatic rings fused onto hetero rings; however the pyridine/$SO_3$ salt is often used for these sulfonations.

The second preparative route for making solubilized substituted porphines is to prepare the solubilized porphine species of choice by using starting materials already containing the solubilized groups as part of their own constitution.

When a pyridyl porphine such as $\alpha,\beta,\gamma,\delta$-tetrakis (4-pyridyl)porphine, is reacted with an alkyl halide such as $CH_3I$, a quaternary pyridinium salt is formed which is an effective photoactivating bleach of this invention providing the other requirements are met as set forth herein. Quaternary porphine derivatives adsorb directly and strongly upon cotton fabrics because of their opposite charge. This is desirable; however a countervailing factor is the yellowish color of many such compounds which tends to remain on the fabric after washing. The methyl ester of toluene sulfonate may be used instead of methyl iodide as a quaternizing salt. When substituted pyrroles are reacted with pyridine 4-carboxyaldehyde, and the reaction product reacted with an alkyl halide, a number of different pyridinium salts are formed.

Aza pyridinium salts can be made by condensing and rearranging pyrido-substituted imides or dinitriles, or by condensing and rearranging pyrido-substituted aromatic vicinal dicarboxylic acids in the presence of ammonia.

Mono-, di-, and tri-aza pyridinium salts can be prepared by using mixtures of starting materials which yields mixtures of reaction products according to the proportions of the reactants. If pure species are desired, they can be purified by chromatographic techniques.

A completely different route to quaternized porphine compounds having fused ring substitution on the pyrrole rings is the condensation and rearrangement of 4 molecules of cyano aromatic or cyano heterocyclic ketones to form a quadridentate structure.

To utilize this method to make quaternary ammonium salts it is only necessary to start with a compound having a tertiary amino group in the R moiety, and then quaternize the resultant porphine as before. For example,

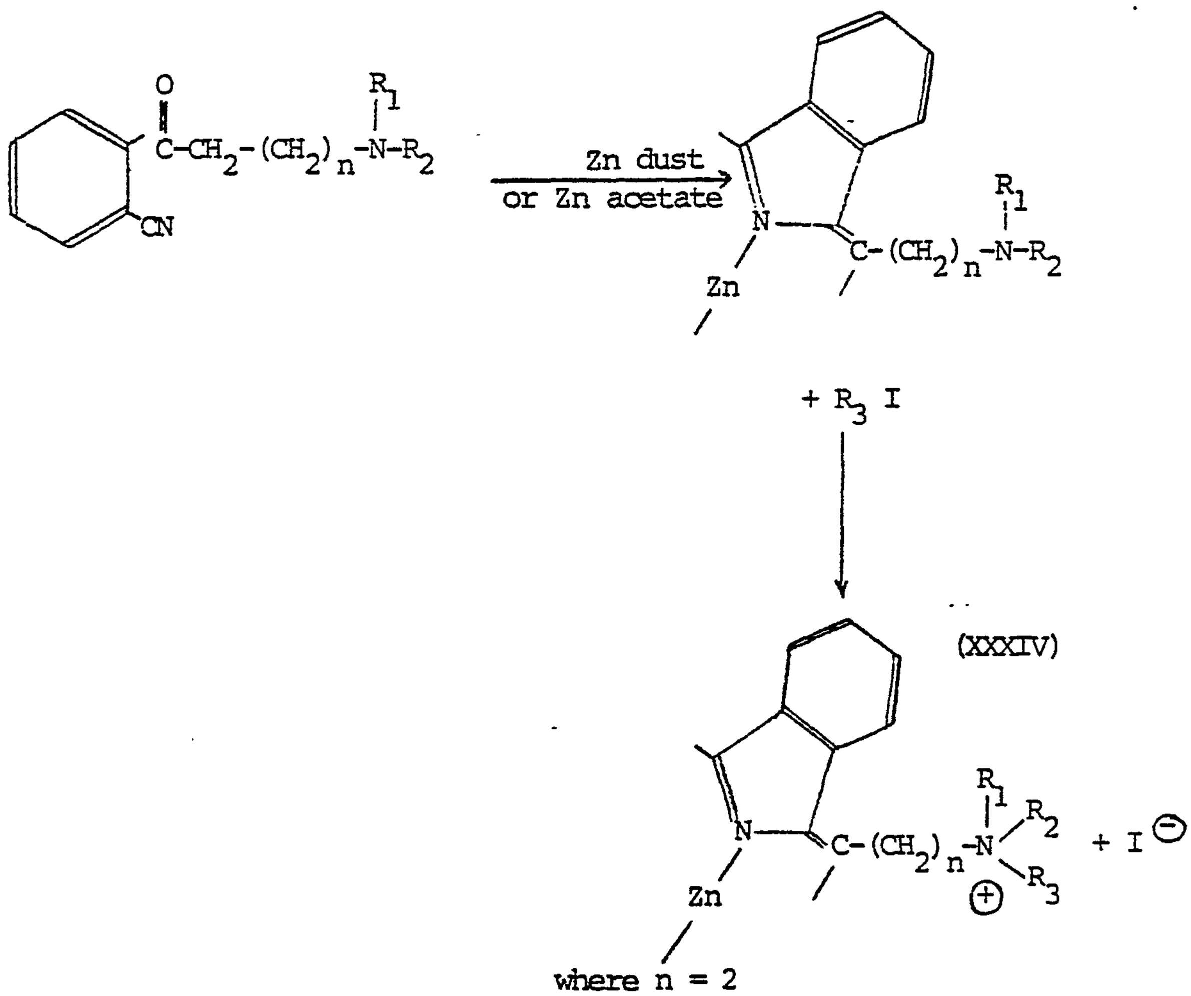


(XXXIV)

where n = 2

$\alpha, \beta, \gamma, \delta$-tetrakis-(N-trialkyl amino ethyl) porphine zinc, tetra iodide

Quaternary ammonium aza porphines can be made by adaptation of the above method as for example:

(XXXV)

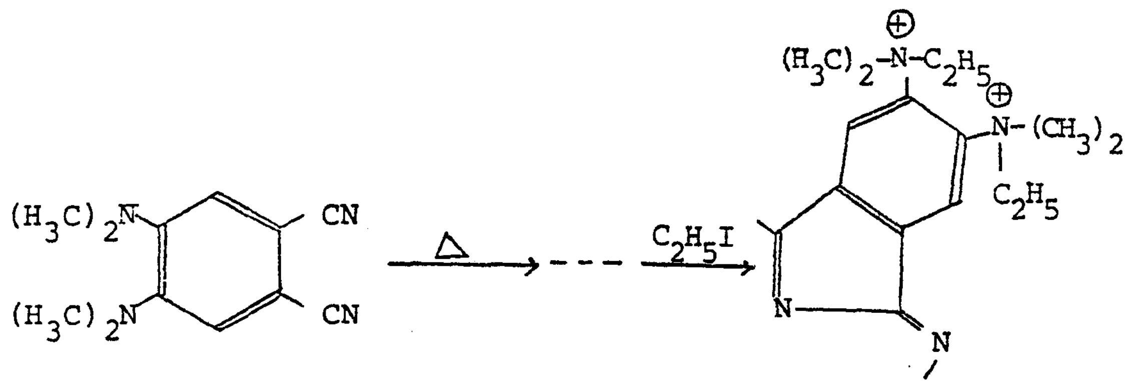


tetrakis-di-(N-dimethyl-N-ethylamino) benzo-α,β,γ,δ-tetraaza porphine, octaiodide salt

Among the preferred nonionic and anionic solubilizing groups of the photoactivators of this invention are polyethoxylates, sulfates, polyethoxysulfates, carboxylates, polyethoxy carboxylates, and phosphates. A suitable preparative method for introducing all such groups into the porphine structure is to first make the corresponding polyhydroxy porphine, and then convert the hydroxy groups to the solubilizing groups of choice. Accordingly, methods of preparing hydroxy porphines will be described below, following which known means of converting these compounds to polyethoxylates, sulfates, etc. can be used.

One method of making polyhydroxy porphines is the reaction of pyrrole and substituted pyrroles with hydroxy-substituted aromatic aldehydes. For example, pyrrole will react with indole-5-hydroxy-2-carboxaldehyde to form α,β,γ,δ-tetrakis-(5-hydroxy-2-indolyl) porphine.

Mixtures of analogous starting materials yield porphine structures wherein the 4 quarters of the quadridentate molecules have non-identical structures, according to the proportions used. This method of preparation can be exemplified by the use of a mixture of pyrrole and benzo-pyrrole with benzaldehyde to yield <u>di</u>benzo meso tetraphenyl porphine.

In another preparative method, hydroxy cyano aromatic or hydroxy cyano heterocyclic ketones can be condensed and rearranged to form the stable porphine quadridentate structure. This is illustrated in the following examples, showing only one quarter of the porphine product.

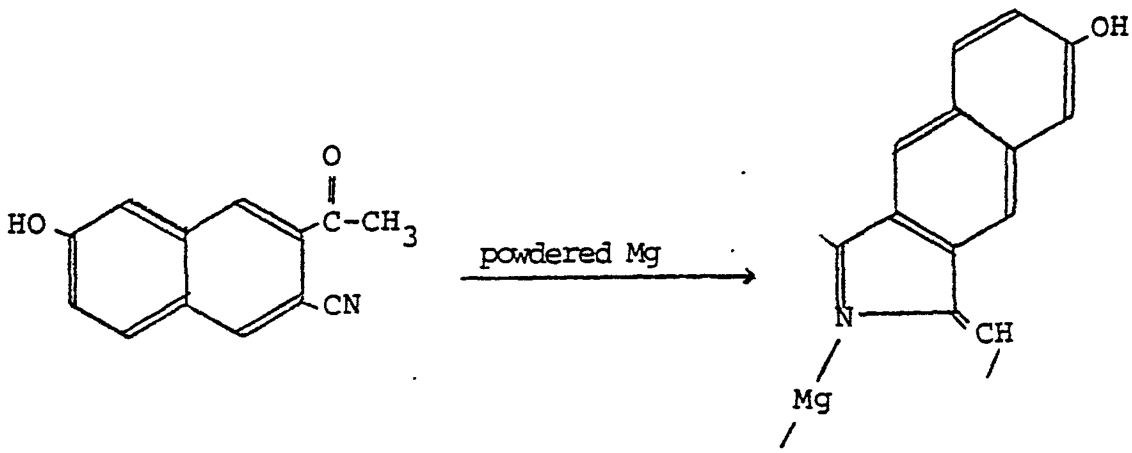


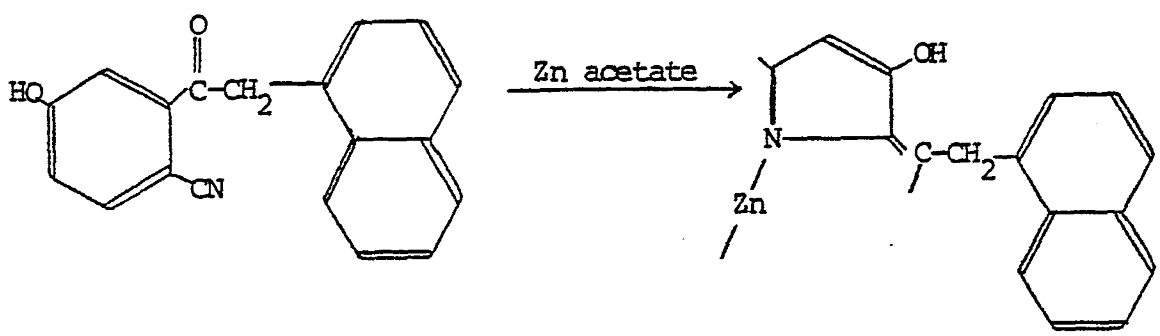


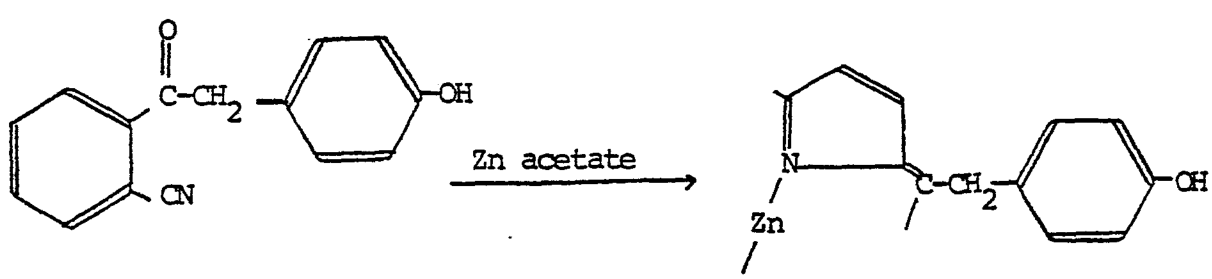

Mixtures of the above starting materials yield porphine structures wherein the 4 quarters of the quadridentate molecules have non-identical structures, according to the proportions used.

Hydroxy-substituted aza porphines can be made by condensation and rearrangement of hydroxy-substituted aromatic vicinal dicarboxylic acids (for example hydroxyphthalic acid) in the presence of ammonia.

A mixture of polyhydroxy mono- and di-aza porphines results from using, as starting materials, a mixture of a metal cyanide with a ketone whose two side groups are, respectively, (alkyl or aryl) and (halo aryl or halo heterocyclic), where one or the other or both side groups of the ketone have a hydroxyl group substituted therein.

The hydroxy groups of the foregoing hydroxy substituted porphines can be converted to solubilizing groups of this invention according to well known chemical reaction procedures. In this way, porphines can be prepared having the following solubilizing groups: polyethoxylate; sulfate; polyethoxysulfate; carboxylate; methoxy carboxylate; polyethoxy carboxylate; phosphate; and polyethoxy phosphate.

It will be appreciated that one skilled in the chemical arts, and particularly in the color and dye arts, can apply the foregoing principles to make his photoactivator of choice according to this invention.

Remote sites are preferred for the solubilizing groups of this invention. Porphine structures solubilized at remote sites have a reduced tendency to aggregate into multilayers on fabric surfaces because they tend to have more bulk and less crystal order; hence the intensive blue/green coloration of these substances is imparted to the fabrics in reduced amount. Also, remotely solubilized porphines participate to a relatively small degree in side reactions; thus the excited singlet state of such compounds is converted more efficiently to the excited triplet state which reacts with oxygen to bring about the intended bleaching of stains. This is an economic advantage.

Especially preferred photoactivators are remotely sulfated amino sulfonyl porphines. These compounds not only have the benefits discussed supra for remotely solubilized porphines generally, but also have the added benefit of substantivity to synthetic fibers as well as cotton fibers. These compounds can be prepared by a process involving the following sequential steps:

1) Preparing a porphine without solubilizing groups. This step is illustrated by the preparation of all cationic porphines exemplified hereinbefore, omitting the quaternization step; and by the preparation of all hydroxy porphines exemplified hereinbefore, where the starting materials are analagous non-hydroxy-substituted compounds.
2) Reacting with chlorosulfonic acid and thionyl chloride to form the corresponding chlorosulfonated porphine.
3) Condensing with an amino alcohol, using an aqueous medium and a temperature at which may be at, above, or below normal ambient.
4) Sulfonating with oleum.

Among the amino alcohols that are operable in these reactions may be mentioned 2-amino-2-methyl-1,3-propane diol, 2-amino-2-ethyl-1,3-propane diol, tri(hydroxymethyl) amino methane, 1-amino glucose, 2-amino glucose, and 1-methyl-amino-2,3-propane diol.

The foregoing description concerns compositions containing only surfactant and photoactivator, which are the essential elements of this invention. They are unbuilt compositions. Other components are optional, as the photoactivators of this invention are useful in a great variety of otherwise conventional compositions.

For instance, conventional alkaline detergent builders, inorganic or organic, can be used at levels up to about 80% by weight of the composition, preferably from 10% to 60%, especially 20% to 40%. The weight ratio of surfactant to total builder in built compositions can be from 5:1 to 1:5, preferably from 2:1 to 1:2.

Examples of suitable inorganic alkaline detergency builder salts useful in this invention are water soluble alkali metal carbonates, borates, phosphates, polyphosphates, bicarbonates and silicates. Specific examples of such salts are sodium and potassium tetraborates, perborates, bicarbonates, carbonates, tripolyphosphates, pyrophosphates, orthophosphates, and hexametaphosphates.

Examples of suitable organic alkaline detergency builder salts are: (1) water-soluble aminopolycarboxylates, e.g. sodium and potassium ethylenediaminetetraacetates, nitrilotriacetates and N-(2-hydroxyethyl)-nitrilodiacetates; (2) water-soluble salts of phytic acid, e.g., sodium and potassium phytates --see U.S. Pat. No. 2,739,942; (3) water-soluble polyphosphonates, including specifically, sodium, potassium and lithium salts of ethane-1-hydroxy-1,1-diphosphonic acid; sodium, potassium and lithium salts of methylene diphosphonic acid; sodium, potassium and lithium salts of ethylene diphosphonic acid; and sodium, potassium and lithium salts of ethane-1,1,2-triphosphonic acid. Other examples include the alkali metal salts of ethane-2-carboxy-1,1-diphosphonic acid, hydroxymethanediphosphonic acid, carboxyldiphosphonic acid, ethane-1-hydroxy-1,1,2-triphosphonic acid, ethane-2-hydroxy-1,1,2-triphosphonic acid, propane-1,1,3,3-tetraphosphonic acid, propane-1,1,2,3-tetraphosphonic acid, and propane-1,2,2,3-tetraphosphonic acid; (4) water-soluble salts of polycarboxylate polymers and copolymers as described in U.S. Patent No. 3,308,067.

In addition, polycarboxylate builders can be used satisfactorily, including water-soluble salts of mellitic acid, citric acid, and carboxymethyloxysuccinic acid and salts of polymers of itaconic acid and maleic acid.

Certain zeolites or aluminosilicates enhance the function of the alkaline metal pyrophosphate and add building capacity in that the aluminosilicates sequester calcium hardness. One such aluminosilicate which is useful in the compositions of the invention is an amorphous water-insoluble

hydrated compound of the formula $Na_x(sAlO_2.SiO_2)$, wherein x is a number from 1.0 to 1.2 and y is 1, said amorphous material being further characterized by a $Mg^{++}$ exchange capacity of from about 50 mg eq. $CaCO_3$/g. to about 150 mg eq. $CaCO_3$/g. and a particle diameter of from about 0.01 microns to about 5 microns. This ion exchange builder is more fully described in British patent No. 1,470,250.

A second water-insoluble synthetic aluminosilicate ion exchange material useful herein is crystalline in nature and has the formula $Na_z[(AlO_2)_z.(SiO_2)]xH_2O$, wherein z and y are integers of at least 6; the molar ratio of z to y is in the range from 1.0 to about 0.5, and x is an integer from about 15 to about 264; said aluminosilicate ion exchange material having a particle size diameter from about 0.1 micron to about 100 microns; a calcium ion exchange capacity on an anhydrous basis of at least about 200 milligrams equivalent of $CaCO_3$ hardness per gram; and a calcium ion exchange rate on an anhydrous basis of at least about 2 grains/gallon/minute/gram. These synthetic aluminosilicates are more fully described in British Patent No. 1,429,143.

For nominally unbuilt compositions, it is contemplated that compositions can contain minor amounts, i.e. up to about 10%, of compounds that, while commonly classified as detergent builders, are used primarily for purposes other than reducing free hardness ions; for example electrolytes used to buffer pH, add ionic strength, control viscosity, prevent gelling, etc.

It is to be understood that the detergent bleach compositions of the present invention can contain other components commonly used in detergent compositions. Soil suspending agents such as water-soluble salts of carboxymethylcellulose, carboxyhydroxymethylcellulose, copolymers of maleic anhydride and vinyl ethers, and polyethylene glycols having a molecular weigth of about 400 to 10,000 are common components of the detergent compositions of the present invention and can be used at levels of about 0.5% to about 10% by weigth. Dyes,

pigments, optical brighteners, perfumes, enzymes, anti-caking agents, suds control agents and fillers can be added in varying amounts as desired.

Peroxygen bleaches such as sodium perborate can optionally be used in the compositions of this invention; they are however effective only at relatively high temperatures such as approximately 160°F. and above. In conjunction therewith, conventional chemical activators can be used to bleach more effectively at low temperatures, such as the anhydrides, esters and amides disclosed by Gilbert in Detergent Age, June 1967 pages 18-20, July 1967 pages 30-33, and August 1967 pages 26-27 and 67. It is generally believed that these activators function by means of a chemical reaction that requires usage in approximately a 1:1 mol ratio with the peroxygen compound.

It should be understood that, as described in detail hereinbefore, the instant photoactivators do not function by activating perborate or other peroxygen compounds; the mechanism by which the instant photoactivators accomplish their purpose is by activating atmospheric oxygen. Nevertheless, formulations are not precluded that contain components which bleach by two different mechanisms operating independently.

Granular formulations embodying the compositions of the present invention may be formed by any of the conventional techniques i.e., by slurrying the individual components in water and then atomizing and spray-drying the resultant mixture, or by pan or drum granulation of the components. A preferred method of spray drying compositions in granule form is disclosed in U.S. Patents 3,629,951 and 3,629,955 issued to Davis et al on December 28, 1971.

Liquid detergents embodying the photoactivating compositions of the present invention can contain builders or can be unbuilt. If unbuilt, they can contain about 10 to about 50% surfactant, from 1 to about 15% of an organic base such as mono-, di-, or tri-alkanolamine, and a solubilization system containing various mixtures of water, lower alcohols and glycols, and hydrotropes. Built liquid single-phase compositions can contain about 10 to about 25% surfactant, from about 10 to about 20% builder which can be inorganic or organic, about 3 to about 10% hydrotrope, and water. Built liquid compositions in multi-phase heterogeneous form can contain comparable amounts of surfactant and builder together with viscosity modifiers and stabilizers to maintain stable emulsions or suspensions.

The compositions of the present invention can also be prepared in the form of a laundry bar or can be impregnated into a water-insoluble substrate.

Detergent bleach formulations embodying the compositions of the present invention are commonly used in laundry practice at concentrations from about 0.1 to about 0.6 wt.% in water. Within these approximate ranges are variations in typical usage from household to household and from country to country, depending on washing conditions such as the ratio of fabric to water, degree of soiling of the fabrics, temperature and hardness of the water, method of washing whether by hand or by machine, specific formulation employed, etc.

It has been stated hereinbefore that photoactivator usage is from about 0.005% to about 0.5% by weight based on the detergent bleach composition, preferably from about 0.01% to about 0.1%. Combining those figures with the foregoing detergent bleach concentrations in water yields the result that photoactivator concentrations in water range from about 0.05 parts per million (ppm) to about 30 ppm. Within this range, from about 0.25 to about 5 ppm. are preferred. The lower side of the foregoing ranges are especially effective when the laundry process involves exposing fabric to photoactivator for a relatively long time, as for example during a 30 to 120-minute presoak followed by a 20 to 30-minute wash, and drying the fabric

in brilliant sunlight. The higher side of the foregoing ranges are needed when the laundry process involves exposing fabric to photoactivator for a relatively short time, as for example during a short 10-minute wash followed by drying in an illuminated dryer, on a line indoors, or outdoors on a cloudy day. While exposure to oxygen and visible light are essential, the source, intensity and duration of exposure of the light affect merely the degree of bleaching achieved.

EXAMPLE I

Tetrabenzo triaza porphine was prepared as follows: a solution of methyl magnesium iodide was prepared from 2.4 gm. of magnesium and 6.5 ml. of methyl iodide in 100 ml. of ether; this was decanted from the residual metal and added to a mixture of 12.8 gm. of finely powdered phthalonitrile and 50 ml. of ether. Upon addition, the liquid at once turned reddish-brown, the nitrile dissolving, the ether gently boiling, and a tarry mass forming. After three hours at room temperature, the remainder of the ether was removed on a steam bath and the tarry residue was rapidly heated to 200°C. Three ml. of $H_2O$ were added dropwise, liberating first white fumes and then iodine vapor. After a further 1/2 hour at 200°C, the powdery residue was cooled, crushed and repeatedly extracted with a mixture of alcohol and 10% concentrated hydrochloric acid until the extract was no longer brown in color. The residue was then washed with 500 ml.of absolute ethanol and dried in an oven at 105°C

for one hour. The product was freed from magnesium by dissolving it in concentrated sulfuric acid (150 ml.), followed by filtration and precipitation of the pigment with ice. The green precipitate was then collected on a filter and was washed with hot water containing 5% ammonium hydroxide. It was then dried at 105°C and crystallized from chloronaphthalene. Yield was 4.2 gm. of tetrabenzo triaza porphine in the form of purple needle-like crystals.

Elemental analysis of the product yielded the following results:

| | | %C | %H | %N |
|---|---|---|---|---|
| $C_{33}H_{19}N_7$ | requires: | 77.2 | 3.7 | 19.1 |
| | found : | 77.3 | 3.6 | 19.3 |

A quantitative examination of the spectrum of the pigment in chloronaphthalene, using a Cary 14 spectrometer, gave the following results:

| | | | | | | | |
|---|---|---|---|---|---|---|---|
| Wave length | λ (nm) | 694 | 652 | 638 | 622 | 592 | 570 |
| Extinction coef. | log. ε | 5.19 | 5.03 | 4.75 | 4.66 | 4.43 | 4.03 |

The foregoing method of preparation is similar to that described in Barrett et al., J. Chem. Society, pages 1809-1820, and the spectrum reported above is identical to that found by Barrett.

Tetrabenzo triaza porphine was metallated to <u>tetrabenzo triaza porphine zinc</u> by the following process: 200ml. of reagent grane N,N' dimethylformamide was brought to reflux in a 2.1 flask on a stirring hot plate. Tetrabenzo triaza porphine (2gm.) was then added, 1 minute allowed for complete solution to occur, and then a 10% excess of the stoichiometric amount of zinc acetate was added (.86 gm.) and reaction was allowed to proceed under reflux for one hour. The reaction vessel was then removed from the hot plate and cooled in an ice-water bath for 15 minutes. 200 ml. of chilled distilled water was then added, and the resulting partially crystalline precipitate was filtered, washed with water, and air-dried. The product was then recrystallized from chloronaphthalene. Yield was 1.9 gm. in the form of purplish crystals.

Sulfonation of tetrabenzo triaza porphine zinc led to the compound tetrasulfobenzo triaza porphine, tetrasodium salt, with demetallation occurring simultaneously: One gram of tetrabenzo triaza porphine zinc and 20 ml. of concentrated $H_2SO_4$ were ground into a homogeneous paste with a mortar and pestle. The paste was then transferred to a 250 ml. beaker and 50 additional ml. of concentrated $H_2SO_4$ were admixed. The mixture was then heated on a steam bath for 4 hours, removed and allowed to stand at room temperature for 48 hours, and filtered to remove unreacted pigment. The filtrate was then diluted with two volumes of $H_2O$ to precipitate the bright gree $HSO_4^-$ salt of the sulfonated material, which was filtered and washed with acetone and then dissolved in alkaline methanol (5% NaOH in $CH_3OH$). The sulfonated porphine was then precipitated as the sodium salt by addition of 3 volumes of acetone. After the product was then dried, it was extracted with hot methanol to remove $Na_2SO_4$ residues. After extraction, the porphine was dissolved in $H_2O$, acidified to pH 3, and passed through the H+ form of the cation exchange resin Dowex 50W-X8 (50-100 mesh) to remove ionic zinc. Pure tetrasulfobenzo triaza porphine in the form of a fine green powder was then isolated from a pH 5 solution by the addition of four volumes of acetone. Tetrasulfobenzo triaza porphine, tetrasodium salt, was evaluated as a photoactive bleach in conjunction with a granular detergent having the following composition which has a pH at use concentration in water of about 10.2.

| Component | Wt. % Composition |
|---|---|
| $C_{12}$ branched chain alkyl benzene sulfonate | 20 |
| Sodium tripolyphosphate | 28 |
| Sodium toluene sulfonate | 2 |
| Silicate solids (2.0 ratio $SiO_2/Na_2O$) | 5.4 |
| Sodium sulfate | 34 |
| Sodium carbonate | 0.17 |
| Sodium carboxymethyl cellulose | 0.45 |
| Perfume | 0.1 |
| Optical brightener | (none) |
| Miscellaneous | 1.38 |
| Moisture | 8.5 |
| Total | |
| Total detergent | 100.00 |

EXAMPLE II

Tetra(4-sulfophenyl) porphine, tetraammonium salt was prepared as follows : Two grams of tetraphenyl porphine, obtained from the Aldrich Chemical Company, Milwaukee, Wisconsin, U.S.A., was sulfonated in the manner described in Example I for tetrabenzo triaza porphine with the exception that neutralization was done with methanolic ammonia (5%). Yield was 2.5 gm. of tetra(4-sulfophenyl) porphine tetraammonium salt. Confirmation that the porphine was tetrasulfonated was obtained through the chromatographic technique described above. Confirmation that the sulfonations took place in the 4 position was done by nuclear magnetic resonance (nmr) : the nmr specturm of the sulfonated compound in $D_2O$ shows an abdorption due to the pyrrole protons at $\tau = 2.19$ referred to a 3(trimethilsylyl) propane sulfonic acid reference, and two doublets due to the phenyl protons centered at $\tau = 2.79$ and 1.81 with a coupling between them of 8 cps. The integrated area of the phenyl protons to pyrrole protons gave the expected 2:1 ratio.

Further confirmation of the purity of the material was done by spectral analysis on a Cary 14 spectrometer:

| λ (nm) | 411 | 515 | 552 | 580 | 633 |
|---|---|---|---|---|---|
| Log ε | 4.72 | 3.21 | 2.82 | 2.79 | 2.57 |

The foregoing method of preparation is similar to that described in Fleisher, J. Amer. Chem. Soc. 93, 3162(1971), and the spectrum reported above agrees very well with that found by Fleisher.

Metallation was accomplished in a manner similar to that described in Example I. One gram of tetra(4-sulfophenyl) porphine, tetraammonium salt was reacted with a 10% excess of zinc acetate in refluxing dimethyl formamide for one hour. However isolation of the product was accomplished by a different procedure. After completion of the reaction, the solvent was removed on a rotavaporator to obtain a residue. This residue was dissolved in water, acidified to pH3, and passed through the H+ form of the cation exchange resin Dowex 50W-X8 (50-100 mesh) to remove the excess ionic zinc. As the solution passed through the resin, it was immediately neutralized with sodium hydroxide to avoid decomposition of the acidic compound to zinc and the unmetallated porphine sulfonate. Yield was 0.96g. tetra(4-sulfophenyl porphine tetrasodium salt.

Spectral analysis yielded the following results:

| λ (nm) | 517 | 557 | 595 | 630 |
|---|---|---|---|---|
| Log ε | 2.88 | 3.28 | 2.84 | 1.81 |

Analysis of the zinc content by atomic absorption yielded 6.47% zinc vs. 6.50% theoretical on the basis of the empirical formula $C_{44}H_{28}N_4S_4O_{14}ZnNa_4$ which includes 2 moles of water of hydration.

Tetra(4-sulfophenyl) porphine, tetraammonium salt and its metallated derivative tetra(4-sulfophenyl) porphine zinc, tetrasodium salt were utilised in compositions analogous to that described in Example I were run on both tetra(4-sulfophenyl) porphine, tetraammonium salt and its metallated

derivative tetra(4-sulfophenyl) porphine zinc, tetrasodium salt. The unmetallated compound mentioned in the preceding paragraph was evaluated in combination with the following unbuilt detergent compositions in liquid form.

a)

| Component | Wt.% Composition |
|---|---|
| $C_{14-15}$ alkyl polyethoxy ether having an average of 7 mols of ethylene oxide per mol of alcohol | 33 |
| Sodium $C_{12}$ alkyl benzene sulfonate | 22 |
| Oleic acid | 1.0 |
| Triethanol amine | 5.5 |
| Ethanol | 4.7 |
| Electrolyte(0.9 KOH;0.1 citric acid) | 1.0 |
| Perfume,color and brightener | 0.7 |
| Water and miscellaneous | 32.1 |
| | 100.0 |

pH at use conc. in $H_2O$ $\pm$ 8.5

b)

| Component | Wt.% Composition |
|---|---|
| Ammonium salt of coconut alkyl polyethoxy ether sulfate having an average of 3 mols of ethylene oxide per mol of alcohol | 25 |
| Sodium salt of $C_{14-16}$alkyl polyethoxy ether sulfate having an average of 2 mols of ethylene oxide per mol of alcohol | 5 |
| Sodium salt of coconut alkyl glyceryl ether sulfonate | 4 |
| Potassium toluene sulfonate | 0.5 |
| Ethanol | 6.9 |

| | |
|---|---|
| Electrolytes(2.5KCl;0.5 $H_3PO_4$; 0.5 potassium toluene sulfonate; 0.1 citric acid) | 3.6 |
| Citric acid, perfume and opacifier | 1.2 |
| Ethylene glycol distearate | 1.0 |
| Water and miscellaneous | 52.8 |
| | 100.0 |

pH at use conc. in $H_2O$ $\pm$ 7.0

The composition of Example I was used at a 0.25% concentration in wash solutions containing 1 and 10 ppm of photoactivator. The compositions of Example II were used at a 0.36% concentration in wash solutions containing 3.5 ppm of photoactivator. In every case, the compositions showed enhanced stain removal characteristics when compared with control compositions without photoactivator.

EXAMPLE III

Detergent bleach compositions of this invention are preapred as described in Table I which follows. Compositions 12, 15 and 16 are in liquid form while the remainder are in granular form. When tested for bleaching in the manner described in Example I they are effective. All figures in the table are weight percent of the compositions, and identification of the components specified in the table appears thereafter. For all compositions the balance not specified is comprised of sodium sulfate.

Compositions 17, 18 and 19 are prepared like compositions 2, 6 and 13 respectively, except that the porphine is metallated with aluminium instead of zinc. Compositions 20, 21 and 22 are also prepared similarly, but with calcium metallation. These compositions also have effective bleaching performance.

Table I

| Composition No. | Photoactivator (Wt. %) | | Surfactant (Wt. %) | | Builder (Wt. %) | | Moisture (Wt. %) | Other Components (Wt. %) | |
|---|---|---|---|---|---|---|---|---|---|
| 1 | 0.20% | pa | 10% | sa | 4% | ba | 14% | 1% | oa |
| | | | | | | | | 0.2 | ob |
| | | | | | | | | 2 | oc |
| 2 | 0.015 | pb | 15 | sb | 8 | bb | 10 | 0.5 | oa |
| | | | | | 2 | bg | | 0.1 | ob |
| | | | | | 5 | bh | | 1 | od |
| 3 | 0.005 | pc | 15 | sc | 20 | bb | 5 | 0.1 | ob |
| | | | 5 | sm | 10 | bf | | 0.5 | oe |
| | | | | | 10 | bl | | | |
| 4 | 0.25 | pd | 20 | sa | 22 | bc | 6 | 0.2 | of |
| | | | 10 | sd | 8 | bg | | | |
| 5 | 0.25 | pa | 30 | se | 10 | bb | 8 | 0.1 | ob |
| | 0.25 | pe | 10 | sk | 10 | bi | | | |
| 6 | 0.010 | pf | 40 | sb | 10 | bm | 2 | 0.5 | oa |
| | | | 10 | sl | | | | | |
| 7 | 0.40 | pg | 12 | sf | 40 | ba | 10 | 1 | oc |
| | | | 3 | sn | 10 | bj | | | |
| | | | | | 10 | bn | | | |
| 8 | 0.025 | ph | 15 | sa | 15 | ba | 4 | 0.1 | of |
| | | | 10 | sg | 15 | be | | 0.5 | oh |
| | | | | | 5 | bg | | 10 | oj |
| 9 | 0.02 | pi | 12 | sh | 50 | ba | 6 | 0.2 | ob |
| | | | | | 10 | bf | | | |
| | | | | | 20 | bk | | | |
| 10 | 0.15 | pj | 2 | sj | 24 | bd | 7 | 10 | oi |
| | | | 26 | sp | 4 | bg | | | |
| 11 | 0.25 | pk | 32 | sc | 0 | | 11 | 1 | oa |
| | | | 8 | si | | | | 1 | oc |
| 12 | 0.05 | pl | 14 | sq | 12 | bn | 61.3 | 0.5 | ob |
| | | | | | | | | 12 | oc |
| | | | | | | | | 0.1 | og |
| 13 | 0.35 | pm | 18 | sc | 0 | | 12 | 0.1 | of |
| | | | 4 | so | | | | | |
| 14 | 0.04 | pn | 30 | se | --- | | 10 | 2 | bj |
| | | | | | | | | 0.1 | ob |
| 15 | 0.10 | po | 17 | sq | 0 | | 71.9 | 5 | oc |
| | | | | | | | | 6 | om |
| 16 | 0.20 | pp | 8 | sm | 0 | | 61.4 | 0.3 | ob |
| | | | 15 | sr | | | | 3 | oc |
| | | | | | | | | 0.01 | og |
| | | | | | | | | 10 | ok |
| | | | | | | | | 2 | ol |

Photoactivators

pa tetrasulfobenzo triaza porphine, tetrasodium salt

pb tetrasulfobenzo triaza porphine zinc, tetrasodium salt

pc tetra(4-sulfophenyl) porphine, tetraammonium salt

pd tetra(4-sulfophenyl) porphine zinc, tetrasodium salt

pe trisulfobenzo-meso-tetraphenyl porphine, trisodium salt

pf tetrasulfopyrido-meso-tetraphenyl porphine zinc, tetrapotassium salt

pg tetrasulfonaphtho monoaza porphine, tetrasodium salt

ph benzotrisulfobenzo monoaza porphine magnesium, trisodium salt

pi benzotrisulfobenzo diaza porphine, trilithium salt

pj tetrasulfobenzo diaza porphine scandium, tetradiethanolamine salt

pk 1,2,3,4,5,6,7,8-octasulfophenyl porphine, octasodium salt

pl trans-dichloro, trisulfobenzo-tri(sulfo-2-pyridyl)-2-pyridyl porphine tin (IV), hexasodium salt

pm α, β, γ, δ - tetrakis 2-furyl, 5 sulfo) porphine zinc, tetrasodium salt

pn tetrasulfonaphtho-meso-tetraethyl porphine, tetrapotassium salt

po meso-sulfopyrryl-meso-trisulfophenyl porphine, tetrasodium salt

pp benzo trisulfobenzo porphine, tetrasodium salt

Surfactants

sa $C_{12}$ branched chain alkyl benzene sulfonate (ABS), sodium salt

sb $C_{12}$ linear alkyl benzene sulfonate (LAS), sodium salt

sc coconut alkyl sulfate, sodium salt

sd beta-alkoxy alkane sulfonate containing 2 carbon atoms in the alkyl group and 16 carbon atoms in the alkane moiety

se $C_{16}$ paraffin sulfonate, sodium salt

sf $C_{14}$ alpha olefin sulfonate, sodium salt

sg $C_{18}$ alpha sulfocarboxylate, sodium salt

sh ethyl ester of $C_{18}$ alpha sulfocarboxylate, sodium salt

si tallow alkyl glyceryl ether sulfonate, sodium salt

sj tallow soap

sk alkyl polyethoxy alcohol sulfate having 11 carbon atoms in the alkyl group and 2 mols ethylene oxide per mol of alcohol, sodium salt

sl alkyl phenol polyethoxy alcohol sulfate having 9 carbon atoms in the alkyl group and 10 mols ethylene oxide per mol of alkyl phenol, sodium salt

sm alkyl polyethoxy alcohol having 16 carbon atoms in the alkyl group and 25 mols ethylene oxide per mol of alcohol

sn polyethoxy polypropoxy glycol having a molecular weight of 5000, half of which represents the polypropoxy base and half of which represents hydrophilic polyethoxylate

so dimethyl $C_{12}$ amine oxide

sp $C_{16}$ alkyl dimethyl ammonio propane sulfonate

sq $C_{12}$ linear alkyl benzene sulfonate (LAS), triethanolamine salt

sr coconut alkyl sulfate, potassium salt

Builders

ba sodium tripolyphosphate

bb sodium pyrophosphate

bc sodium nitrilotriacetate

bd citric acid

be sodium carbonate

bf sodium silicate solids, 2.0 ratio $SiO_2/Na_2O$

bg sodium silicate solids, 3.2 ratio $SiO_2/Na_2O$

bh sodium aluminosilicate $Na_{12}(AlO_2 \cdot SiO_2)_{12} \cdot 27\ H_2O$

bi potassium tetraborate

bj sodium bicarbonate

bk potassium hexametaphosphate

bl sodium orthophosphate

bm ethane-1-hydroxy-1,1-diphosphonate, sodium salt

bn potassium pyrophosphate

Other Components

oa polyethylene glycol, molecular weight 6000

ob perfume

oc potassium toluene sulfonate

od sodium sulfosuccinate

oe sodium carboxymethylcellulose

of optical brightener (fluorescer)

og colorant

oh protease

oi montmorrilonite clay

oj sodium perborate

ok ethanol

ol diethylene glycol monoethyl ether

om triethanolamine

EXAMPLE IV

α,β,γ,δ-tetrakis (4-carboxyphenyl) porphine was prepared by refluxing a propionic acid solution, 0.24 molar in both 4-carboxybenzaldehyde and pyrrole, for 2 hours. Upon cooling the reaction mixture, purple crystals of α,β,γ,δ-tetrakis (4-carboxyphenyl) porphine precipitated. Yield was 32%. The product was purified by recrystallization from methanol/chloroform solutions.

The foregoing method of preparation is similar to that described by Longo et al., J. Heterocyclic Chem. 6, 927(1969) and the following spectral analysis performed on a Cary 14 spectrophotometer in pyridine solution agree very well with Longo's and Datta-Gupta's findings, J. Heterocyclic Chem., 3, 195(1966):

| | | | | | | |
|---|---|---|---|---|---|---|
| Wave length | λ(nm) | 423 | 517 | 552 | 591 | 646 |
| Extinction coefficient | log | 5.25 | 4.15 | 3.85 | 3.65 | 3.48 |

Metallation was accomplished as follows: one gram of tetrakis (4-carboxyphenyl) porphine was reacted with a 10% excess of zinc acetate in refluxing dimethyl formamide for one hour. After completion of the reaction, the solvent was removed on a vitoperator to obtain a residue. This residue was dissolved in water, acidified to pH 3, and passed through the $H^{\oplus}$ form of the cation exchange resin Dowex 5DW-X8 (50-100 mesh) to remove the excess ionic zinc. The residue after evaporation yielded a red crystalline product with about 98% yield. Spectral analysis on a Cary 14 spectrophotometer in methanol agreed very well with purblished date for α,β,γ,δ-tetrakis (4-carboxyphenyl) porphine zinc, Longo et al., J. Heterocyclic Chem. 6,927(1969):

| | | | | | |
|---|---|---|---|---|---|
| Wave length | λ(nm) | 429 | 517 | 556 | 596 |
| Extinction coefficient | log | 4.54 | 3.46 | 4.15 | 3.75 |

The acid form of photoactivator, prepared as described above, was converted to the tetra sodium salt upon addition to alkaline (pH∼10) detergent solution, the cations of which were predominantly sodium.

α,β,γ,δ-tetrakis (4-carboxyphenyl) porphine tetrasodium salt, both unmetallated and metallated with zinc, were evaluated as photoactive bleaches in conjunction with a granular detergent as described in Example I and were formed to be effective bleaching (i.e. stain removal) agents.

EXAMPLE V

α,β,γ,δ-tetrakis (4-N-methyl pyridyl) porphine, tetra (4-toluene sulfonate) salt was prepared as follows: a propionic acid solution, 0.24 molar in both pyridine 4-carboxaldehyde and pyrrole, was refluxed for 45 min. The solvent was flashed off and the residue was washed with dimethylformamide to dissolve the tarry by-products leaving purple crystals of tetra (4-pyridyl) porphine. Yield was 22.5% and the product spectral characteristics were in substantial agreement with those observed by Fleisher, Inorg. Chem. 1, 493(1962).

The tetra (4-pyridyl) porphine (0.25 mol) was then refluxed with sodium 4-toluene sulfonate (1.1 mol) overnight in dimethyl formamide. The reaction was then cooled in an ice bath and the product was removed by filtration. The collected violet crystals of α,β,γ,δ-tetra(N-methyl pyridyl) porphine, tetra 4-toluene sulfonate salt were washed with acetone and dried under vacuum. Yield was 92%. Spectral analysis in water at pH 6-7 on a Cary 14 spectrophotometer agreed very well with published data, Pasternack et al., J. Amer.Chem.Soc., 94, 4511(1972):

| | | | | | | |
|---|---|---|---|---|---|---|
| Wave length | $\lambda$ (nm) | 422 | 518 | 551 | 585 | 641 |
| Extinction coefficient | log | 5.17 | 3.96 | 3.83 | 3.57 | 3.07 |

Elemental analysis yielded the following calculated and found values for the empirical formula

$$C_{72}H_{66}N_8S_4O_{12}:$$

| | C | H | N | S |
|---|---|---|---|---|
| Calc : | 63.42 | 4.88 | 8.22 | 9.41 |
| Found : | 63.15 | 5.03 | 8.41 | 9.14 |

Metallation was accomplished in a manner similar to that described above for the tetracarboxy porphine of Example I, with purification accomplished by chromatographic chloroform solutions on alumina. The metallation was done prior to quaternization with 4-toluene sulfonate.

-tetrakis (4-N-methylpyridyl) porphine, tetra (4-toluene sulfonate) salt, metallated with zinc, was found to be an effective photoactivated bleach.

EXAMPLE VI

Tetra (2-sulfatoethyl sulfonamido benzo) tetraaza porphine zinc, tetrasodium salt was prepared as follows : twenty parts of tetrasulfo tetrabenzo tetraaza porphine zinc, tetrasodium salt were added to 200 parts of chlorosulfonic acid with agitation and the mixture is heated to 60°C. At this temperature, 30 parts of thionyl chloride were added dropwise and the mixture was then heated for 4 hours at 80°C. The reaction mixture was then cooled and added with agitation to 200 parts of cold water from which the tetrachloro sulfo tetrabenzo tetraaza porphine zinc was separated by filtration and subsequently washed with 1000 parts of cold water. The tetrachlorosulfo tetrabenzo tetraaza porphine paste was then suspended in 300 parts of cold water and mixed with 30 parts of 2-aminoethanol for 20 hours at 20°C. The suspension was then acidified with hydrochloric acid to obtain a precipitate which was separated by filtration, washed with water and dried. Twenty parts of the already obtained ethanolsulfonamide derivative of tetrabenzo tetraaza porphine zinc were then mixed for 12 hours at 20°C with 100 parts of 10% oleum. The solution was then poured in a solution of 100 parts of sodium chloride into 1700 of water, and 400 parts of ice were added. A blue/

green precipitate was formed and was separated by filtration and was washed with a solution of sodium chloride in water and ethyl alcohol until it was neutral to Congo red. The blue/green powder obtained was then dried at 105°C for 2 hours. The product was purified by six successive precipitations from aqueous solution by the addition of four volumes of acetone. Yield was 28%.

Tetra (2-sulfatoethyl sulfonamido benzo) tetraaza porphine zinc, tetrasodium salt is an effective photoactivated bleach.

EXAMPLE VII

Detergent bleach compositions of this invention are prepared as described in Table II which follows. Compositions 12, 15 and 16 are in liquid form while the remainder are in granular form. When tested for bleaching in the manner described in Example I they are effective. All figures in the table are weight percent of the compositions, and identification of the components specified in the table appears thereafter. For all compositions the balance not specified is comprised of sodium sulfate.

Table II

| Composition No. | Photoactivator | | Surfactant | | Builder | | Moisture | Other Components | |
|---|---|---|---|---|---|---|---|---|---|
| | Weight Percent | | | | | | | | |
| 1 | 0.20% | pq | 10% | sa | 44% | bn | 14% | 1 %<br>0.2<br>2 | oa<br>ob<br>oc |
| 2 | 0.015 | pr | 15 | sb | 8<br>2<br>15 | bb<br>bg<br>bh | 10 | 0.5<br>0.1<br>1 | oa<br>ob<br>od |
| 3 | 0.005 | ps | 15<br>5 | sc<br>sm | 20<br>10<br>10 | bb<br>bf<br>bl | 5 | 0.1<br>0.5 | ob<br>oe |
| 4 | 0.25 | pt | 20<br>10 | sa<br>sd | 22<br>8 | bc<br>bg | 6 | 0.2 | of |
| 5 | 0.25<br>0.25 | pa<br>pu | 30<br>10 | se<br>sk | 10<br>10 | bb<br>bi | 8 | 0.1 | ob |
| 6 | 0.010 | pv | 40<br>10 | sb<br>sl | 10 | bm | 2 | 0.5 | oa |
| 7 | 0.40 | pw | 12<br>3 | sf<br>sn | 40<br>10<br>10 | ba<br>bj<br>bn | 10 | 1 | oc |
| 8 | 0.025 | px | 15<br>10 | sa<br>sg | 15<br>15<br>5 | ba<br>be<br>bg | 4 | 0.1<br>0.5<br>10 | of<br>oh<br>oj |
| 9 | 0.02 | py | 12 | sh | 50<br>10<br>20 | ba<br>bf<br>bk | 6 | 0.2 | ob |
| 10 | 0.15 | pz | 2<br>26 | sj<br>sp | 24<br>4 | bd<br>bg | 7 | 10 | oi |
| 11 | 0.25 | paa | 32<br>8 | sc<br>si | 0 | | 11 | 1<br>1 | oa<br>oc |
| 12 | 0.05 | pbb | 14 | sq | 12 | bn | 61.3 | 0.5<br>12<br>0.1 | ob<br>oc<br>og |
| 13 | 0.35 | pcc | 18<br>4 | sc<br>so | 0 | | 12 | 0.1 | of |
| 14 | 0.04 | pdd | 30 | se | --- | | 10 | 2<br>0.1 | bj<br>ob |
| 15 | 0.10 | pee | 17 | sq | 0 | | 71.9 | 5<br>6 | oc<br>om |
| 16 | 0.20 | pff | 3<br>15 | sm<br>sr | 0 | | 61.4 | 0.3<br>3<br>0.01<br>10<br>2 | ob<br>oc<br>og<br>ok<br>ol |

Photoactivators

pq tetrabenzo - α, β, γ, δ - tetrakis (4-N-methyl) pyridyl porphine tetraiodide

pr tetrakis (carboxybenzo) porphine zinc, tetrasodium salt

ps tetrakis (polyethoxy naphtho) - α, β, γ, δ - tetraphenyl porphine cadmium, tetra-ammonium salt

pt 1, 3, 5, 7 - tetrakis (sulfato polyethoxy phenyl) - α, β, γ, δ - tetrakis (carboxy naphthyl) porphine, octapotassium salt

pu 1, 2, 3, 4 - tetrakis (phosphato phenyl) - α, β, γ, δ - tetraphenyl porphine, tetra (triethanolamine) salt

pv dinaphtho - α, β, γ, δ - tetrakis (phosphato-benzo) porphine magnesium, tetralithium salt

pw 1, 3, 5, 7 - tetrakis (polyethoxy phenyl) - α, γ - di(polyethoxy phenyl) porphine

px mono (polyethoxy benzo) - tribenzo - α, β, γ, δ - tetraphenyl porphine

py bromo, tetrabenzo - α - (4-N-methyl) pyridyl - β, γ, δ - pyridyl porphine scandium monobromide

pz 2, 4, 6, 8 - tetrakis (sulfophenyl-n-heptyl) tetraaza porphine, tetra (monoethanolamine) salt

paa tetrakis - (2-sulfatoethyl aminosulfonylbenzo) - tetraaza porphine zinc, tetra-sodium salt

pbb trans dichloro, - di (N-methyl pyrido) - α, β, γ, δ - tetrakis (4-carboxyphenyl) porphine tin(IV), tetrasodium salt

pcc 1, 3, 5 - tri (4-polyethoxy) - α, β, γ - tri - (4-poly-ethoxy) - δ - aza - porphine

pdd 2, 4, 6, 8 - tetrakis (carboxy methoxy) - α, β, γ, δ - tetraaza porphine, tetra (diethanolamine) salt

pee tri (diphosphatobenzo) - α - (phos-phatomethylbenzyl) - β, γ, δ - triaaza porphine, tetrasodium salt

pff tetra (carboxybenzo) - α, γ - di(carboxybenzo) - β, δ - diaza porphine zinc, hexa-sodium salt

Surfactants, builders and other components are identified in the same manner as described following Table 1.

CLAIMS

1. A detergent bleach composition comprising an anionic, nonionic, semi-polar, ampholytic, or zwitterionic surfactant and from 0.005% to 0.5% by weight of the composition of a water soluble photoactivator having the formula

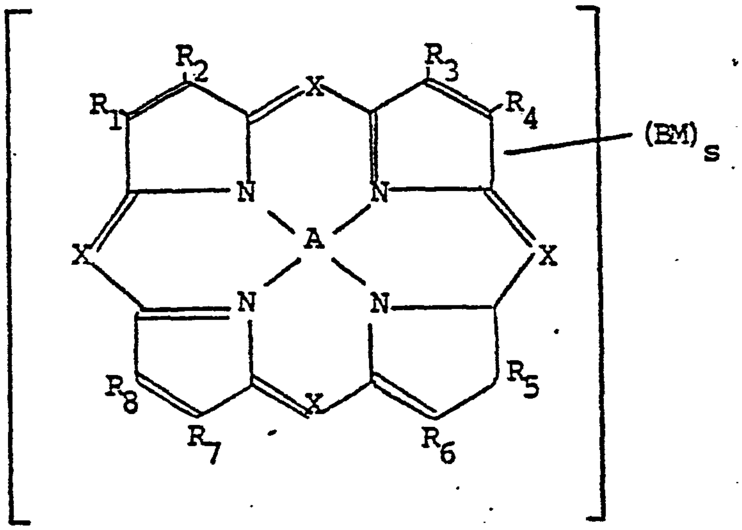

wherein each X is (=N-) or (=CY-), and the total number of (=N-) groups is 0, 1, 2, 3 or 4; wherein each Y, independently, is hydrogen or meso substituted alkyl, cycloalkyl, aralkyl, aryl,alkaryl or heteroaryl; wherein each R, independently, is hydrogen or pyrrole substituted alkyl, cycloalkyl, aralkyl, aryl, alkaryl or heteroaryl, or wherein adjacent pairs of R's are joined together with ortho-arylene groups to form pyrrole substituted alicyclic or heterocyclic rings; wherein A is 2(H) atoms bonded to diagonally opposite nitrogen atoms, or Zn(II), Ca(II), Cd(II), Mg(II), Sc(III), Al(III) or Sn(IV); wherein M is a counterion to the solubilizing groups; wherein s is the number of solubilizing groups; and wherein substituted into Y or R is B, a solubilizing group selected from the group consisting of (a) cationic groups, where M is an anion and s is from 1 to about 8; (b) polyethoxylate nonionic groups $-(CH_2CH_2O)_nH$, where M is zero, s is from 1 to about 8, and N = (sn) = the number of (condensed ethylene oxide molecules per porphine molecule) is from about 8 to about 50; (c) proximate anionic groups attached to atoms no more than 5 atoms displaced

 

from the porphine core, where M is cationic and s is from 3 to about 8; and (d) remote anionic groups attached to atoms more than 5 atoms displaced from the porphine core, where M is cationic and s is from 2 to about 8; wherein said alkyl groups are comprised of simple carbon chains or carbon chains interrupted by other chain-forming atoms; and provided that when the solubilizing groups are sulfonate, the number of said sulfonate groups is no greater in number than. the number of aromatic and heterocyclic substituent groups, and either (i) said sulfonate groups are remote or (ii) the number of (=N-) groups in the photo-activator formula is 0, 1, 2 or 3.

2. A composition according to claim 1, providing additionally that when A is Al(III), the total number of (=N-) groups is 0, 1, 2 or 3.

3. A composition according to claim 1 or claim 2, wherein the total number of (=N-) groups is 0, 1, 2, or 3 and wherein B is a proximate sulfonate group.

4. A composition according to claim 1 or claim 2, wherein the solubilizing groups are cationic and are quaternary pyridinium or quaternary ammonium.

5. A composition according to claim 1 or claim 2, wherein the solubilizing groups are anionic and are carboxylate, polyethoxy carboxylate, sulfate, polyethoxy sulfate, phosphate, polyethoxy phosphate, or remote sulfonate.

6. A composition according to claim 1 or claim 2, wherein the solubilizing groups are nonionic and N is from about 12 to about 40.

7. A composition according to anyone of claims 1-6,, wherein the weight percent of the photoactivator in the

in the composition is from about 0.01% to about 0.1%, and the weight ratio of photoactivator to surfactant is between about 1/300 and about 1/60.

8. A composition according to anyone of claims 1-7 additionally containing an alkaline builder.

9. A composition according to claim 8, comprising from 15% to 30% by weight of surfactant and from 10% to 60% of an alkaline detergent builder selected from water soluble alkali metal carbonates, borates, phosphates, polyphosphates, bicarbonates and silicates; water soluble aminopolycarboxylates, phytates, polyphosphonates, and polycarboxylates; and water soluble aluminosilicates.

10. A process for removing stains from textiles which comprises treating the textiles, in the presence of visible light and oxygen, with an aqueous solution of the detergent bleach composition of anyone of claims 1-9.